# EUROPEAN PATENT SPECIFICATION

(11) **EP 3 702 148 B1**
(45) Date of publication and mention of the grant of the patent: **19.10.2022**
(21) Application number: 18869712.2
(22) Date of filing: 31.05.2018
(51) Int. Cl.: B28B 19/00, B32B 13/08, B32B 37/14, E04B 9/04, E04C 2/04

(54) **PLASTERBOARD MANUFACTURING METHOD AND PLASTERBOARD**
VERFAHREN ZUR HERSTELLUNG VON GIPSPLATTEN UND GIPSPLATTE
PROCÉDÉ DE FABRICATION DE PLAQUE DE PLÂTRE ET PLAQUE DE PLÂTRE

(30) Priority: 23.10.2017 JP 2017204776
(43) Date of publication of application: 02.09.2020
(73) Proprietor: Yoshino Gypsum Co., Ltd., Chiyoda-ku Tokyo 100-0005 (JP)
(72) Inventor: TSUNO, Norio, Tokyo 100-0005 (JP); AMIKURA, Shunji, Tokyo 100-0005 (JP); ISHIBASHI, Seigo, Tokyo 100-0005 (JP)
(74) Representative: Ter Meer Steinmeister & Partner
(86) International application number: PCT/JP2018/021028
(87) International publication number: WO 2019/082433

(56) References cited:
- WO-A1-99/14449
- WO-A1-03/080329
- WO-A1-2014/208226
- JP-A- S5 154 608
- JP-A- 2003 293 515
- JP-U- S58 181 715
- US-A- 1 376 784
- US-A- 1 383 249
- US-A- 1 428 624
- US-A- 3 578 517
- US-A1- 2003 177 730

## Description

### TECHNICAL FIELD

The present invention relates to a method for manufacturing a gypsum board and the gypsum board.

### BACKGROUND ART

Gypsum boards have been used as interior building materials such as ceiling boards. When a gypsum board is used as an interior building material such as a ceiling board, the gypsum board may be, for example, modified into a rabbet-joint gypsum board by attaching bars, which are used to fix the gypsum board, to the back surface of the gypsum board. Also, when a gypsum board is used as a rabbet-joint gypsum board, decorative sheets on which patterns are printed are often bonded to the front surface and the side surfaces of the gypsum board to improve its design.

For example, Patent Document 1 describes a ceiling material that is formed by bonding a decorative sheet to the front surface of a base made of a gypsum board and by attaching first and second wooden bars for construction to the back-side edges of the base. The decorative sheet is formed by stacking a nonwoven fabric on a substrate sheet and impregnating the nonwoven fabric with an ink. The nonwoven fabric is formed such that fibers or fiber masses dispersed in a substantially uniform texture are visible, and the fibers or the fiber masses are formed of fibers having a thickness of 1 to 10 denier and a length of 5 to 50 mm or aggregates of such fibers. The first wooden bar includes a protrusion protruding outward and extending in a longitudinal direction, and the second wooden bar includes a recess extending in the longitudinal direction. When the second wooden bar is attached to the base, a groove that engages with the protrusion is formed between the second wooden bar and the base. A first side of the decorative sheet covers an end face of the base and extends up to the front surface of the protrusion, and a second side of the decorative sheet covers another end face of the base and extends to the back surface of the base. When the protrusion of a ceiling material is fitted into the groove of another ceiling material, the two ceiling materials are combined such that their side edges are slightly apart from each other.

Here, a gypsum board that is used for the rabbet-joint gypsum board described above is formed in a plate shape by placing gypsum slurry between front-cover base paper and back-cover base paper and by bending the front-cover base paper such that the front-cover base paper extends around to a position below the back-cover base paper. Then, the gypsum slurry is hardened to produce the gypsum board.

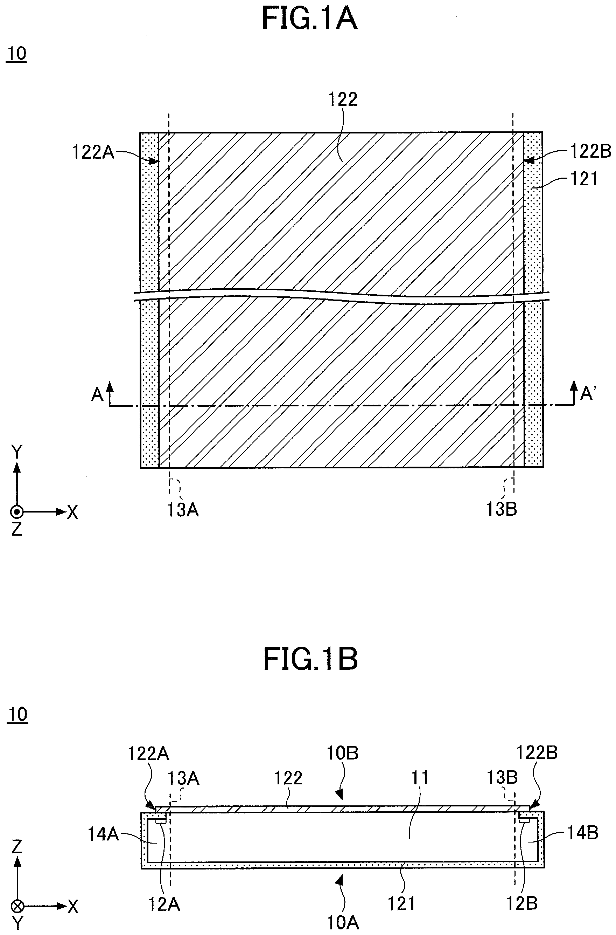

A gypsum board used for a related-art rabbet-joint gypsum board is described with reference to FIGs. 1A and 1B. FIG. 1A is a top view of a surface of back-cover base paper of the gypsum board, i.e., a back surface 10B. FIG. 1B is a cross-sectional view taken along line A-A' in FIG. 1A. In FIGs. 1A and 1B, the X-axis direction is the width direction of a gypsum board 10, the Y-axis direction is the longitudinal direction of the gypsum board 10, and the Z-axis direction is the thickness direction of the gypsum board 10.

As illustrated in FIGs. 1A and 1B, the gypsum board 10 has a structure where front-cover base paper 121 and back-cover base paper 122 used as cover base paper are disposed on the surface of a gypsum core 11. The front-cover base paper 121 mainly constitutes a front surface 10A of the gypsum board 10, and the back-cover base paper 122 constitutes the back surface 10B of the gypsum board 10. As described above, the front-cover base paper 121 is bent along multiple bending lines (not shown) that are parallel to the longitudinal direction of the gypsum board 10 such that ends of the front-cover base paper 121 in the width direction (the X-axis direction), which is orthogonal to the longitudinal direction (the Y-axis direction), extend around to positions below the back-cover base paper 122. Accordingly, a side 122A and a side 122B, which are the ends of the back-cover base paper 122 in the width direction, are disposed on the front-cover base paper 121.

On the back surface 10B of the gypsum board 10, in paper-overlap portions 12A and 12B where the bent portions of the front-cover base paper 121 overlap the portions of the back-cover base paper 122 located above the bent portions, the surface of the gypsum core 11 is covered with two pieces of cover base paper. On the other hand, in other portions, the surface of the gypsum core 11 is covered with one piece of cover base paper.

Because each of the front-cover base paper 121 and the back-cover base paper 122 is thick paper, steps tend to be formed particularly at the side 122A and the side 122B that are the edges of the back-cover base paper 122. Also, at the paper-overlap portions including the steps, the board tends to be thicker than other portions. For this reason, on the back surface 10B of the gypsum board 10, the paper-overlap portions 12A and 12B including the edges of the back-cover base paper 122 are less smooth compared with other portions. Normally, on the back surface 10B of the gypsum board 10, each of the sides 122A and 122B, which are the edges of the back-cover base paper 122, is positioned about 10 mm away from the corresponding end of the gypsum board 10 in the width direction. That is, the paper-overlap portions including the steps are located near the ends of the gypsum board 10 in the width direction, and the smoothness of portions near the ends of the gypsum board in the width direction is poor.

For the above reason, when bars are bonded to the end portions of the back surface 10B in the width direction (the X-axis direction) of the gypsum board 10 to extend along the longitudinal direction (the Y-axis direction) of the gypsum board 10, adhesion failure may occur due to the poor smoothness.

Accordingly, in the related art, to remove portions with poor smoothness, for example, end portions 14A and 14B in the width direction (the X-axis direction) of the gypsum board 10 are removed by cutting the gypsum board 10 along cutting lines 13A and 13B, and then bars are attached and a decorative sheet is bonded.

### [Related-Art Document]

### [Patent Document]

[Patent Document 1] Japanese Laid-Open Patent Publication No. H3-013325

US-A-US3578517 discloses a gypsum board manufacturing method in accordance with the preamble of claim 1 and a gypsum board in accordance with the preamble of claim 3.

### DISCLOSURE OF INVENTION

### PROBLEMS TO BE SOLVED BY THE INVENTION

However, if the end portions 14A and 14B in the width direction of the gypsum board 10 are removed as described above, the gypsum core 11 is exposed at the side surfaces. For this reason, when the decorative sheet is bonded to an area from the front surface 10A to the side surfaces of the gypsum board 10, adhesion failure tends to occur between the decorative sheet and the side surfaces of the gypsum core 11 after cutting, and swelling tends to be formed on the side surfaces. This is undesirable in view of design.

Also, an extra step of cutting the end portions of the gypsum board in the width direction is necessary, and removing the end portions 14A and 14B results in loss of materials. Thus, the related-art method is undesirable also in view of productivity and costs.

For the above reasons, there is a demand for a method of manufacturing a gypsum board that is suitable for a rabbet-joint gypsum board and can closely contact rabbet-joint bars so that there is no need to cut off the end portions of the gypsum board when the bars are attached to the back surface of the gypsum board to make a rabbet-joint gypsum board.

In addition to being used as ceiling boards, gypsum boards may be used as interior building materials for forming, for example, walls of a building. However, as described with reference to FIGs. 1A and 1B, the gypsum board has steps near the lateral edges of the back surface along the longitudinal direction of the gypsum board. Accordingly, when the gypsum board is joined to a base part such as a stud and if the step of the gypsum board is included in a joint surface to be joined to the base part such as a stud disposed along the longitudinal direction of the gypsum board, the gypsum board may not sufficiently closely contact the base part such as a stud. For this reason, there is also a demand for a method that can manufacture a gypsum board that can closely contact a base part such as a stud when the gypsum board is joined to the stud.

As described above, there is a demand for a method that can manufacture a gypsum board that can be properly joined to a rabbet-joint bar or a base part such as a stud.

In view of the problems of the related-art technology described above, one aspect of the present invention provides a method that can manufacture a gypsum board that can be properly joined to a base part.

### MEANS FOR SOLVING THE PROBLEMS

To solve the above problems, according to an aspect of the present invention, there is provided a gypsum board manufacturing method in accordance with claim 1 and a gypsum board in accordance with claim 3.

### ADVANTAGEOUS EFFECT OF THE INVENTION

An embodiment of the present invention makes it possible to provide a method that can manufacture a gypsum board that can be properly joined to a base part.

### BRIEF DESCRIPTION OF THE DRAWINGS

FIG. 1A is a drawing illustrating a gypsum board used to manufacture a related-art rabbet-joint gypsum board;
FIG. 1B is a drawing illustrating a gypsum board used to manufacture a related-art rabbet-joint gypsum board;
FIG. 2 is a drawing illustrating a gypsum board manufacturing method according to an embodiment of the present invention;
FIG. 3A is a drawing illustrating a first configuration example of a molded body obtained by a molding step in the gypsum board manufacturing method according to the embodiment of the present invention;
FIG. 3B is a drawing illustrating the first configuration example of the molded body obtained by the molding step in the gypsum board manufacturing method according to the embodiment of the present invention;
FIG. 4A is a drawing illustrating a second configuration example of a molded body obtained by the molding step in the gypsum board manufacturing method not forming an embodiment of the present invention;
FIG. 4B is a drawing illustrating the second configuration example of the molded body obtained by the molding step in the gypsum board manufacturing method not forming an embodiment of the present invention;
FIG. 5A is a drawing illustrating a third configuration example of a molded body obtained by the molding step in the gypsum board manufacturing method not forming an embodiment of the present invention;
FIG. 5B is a drawing illustrating the third configuration example of the molded body obtained by the molding step in the gypsum board manufacturing method not forming an embodiment of the present invention;
FIG. 6 is a drawing illustrating a bar attaching step;
FIG. 7 is a drawing illustrating how to assemble rabbet-joint gypsum boards;
FIG. 8A is a drawing illustrating a structure formed by joining gypsum boards to base parts; and
FIG. 8B is a drawing illustrating a structure formed by joining gypsum boards to base parts.

### DESCRIPTION OF EMBODIMENTS

Embodiments of the present invention are described below with reference to the accompanying drawings.

### <GYPSUM BOARD MANUFACTURING METHOD>

A gypsum board manufacturing method according to an embodiment is described.

The inventors of the present invention conducted research on a gypsum board manufacturing method that can manufacture a gypsum board suitable for a rabbet-joint gypsum board. The inventors also conducted research on a gypsum board manufacturing method that can manufacture a gypsum board that can be properly joined not only to rabbet-joint bars but also to components such as studs, i.e. a gypsum board that can be properly joined to base parts.

As a result, the inventors have found out that if a gypsum board does not include non-smooth portions on the back surface, i.e., paper-overlap portions located near the lateral ends of the gypsum board and including steps, bars can be attached to the gypsum board without cutting off the end portions in the width direction of the gypsum board and that such a gypsum board is suitable for a rabbet-joint gypsum board, and have achieved the present invention.

The inventors have also discovered that a gypsum board with such a configuration can also be properly fixed to other types of base parts such as studs.

A gypsum board manufacturing method according to the present embodiment may include a molding step of forming a plate-shaped molded body including gypsum slurry and cover base paper disposed to cover at least a part of the surface of the gypsum slurry. In a cross section orthogonal to the longitudinal direction of the molded body, the cover base paper completely covers the periphery of the gypsum slurry, and portions of the cover base paper overlap each other. The distance between a step formed by the overlap of the cover base paper and an end of the molded body in the width direction may be greater than or equal to 15 mm.

A gypsum board manufacturing method according to the present embodiment may include a molding step of forming a plate-shaped molded body including gypsum slurry and cover base paper disposed to cover at least a part of the surface of the gypsum slurry. In a cross section orthogonal to the longitudinal direction of the molded body, the cover base paper completely covers the periphery of the gypsum slurry, and portions of the cover base paper overlap each other. A step formed by the overlap of the cover base paper may be disposed at an end of the molded body in the width direction.

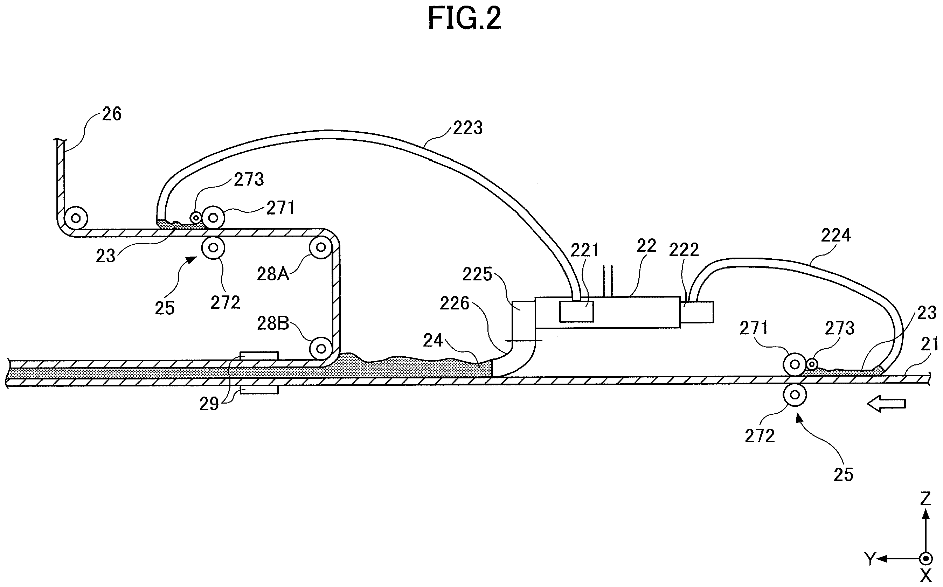

First, the outline of the gypsum board manufacturing method of the present embodiment is described with reference to FIG. 2. In FIG. 2, the X-axis direction indicates the width direction of front-cover base paper 21, back-cover base paper 26, and a molded body; the Y-axis direction indicates the longitudinal direction of the front-cover base paper 21, the back-cover base paper 26, and the molded body; and the Z-axis direction indicates the thickness direction of the molded body.

As described above, the gypsum board manufacturing method according to the present embodiment includes a molding step of forming a plate-shaped molded body including gypsum slurry and cover base paper disposed to cover at least a part of the surface of the gypsum slurry. As described below, the cover base paper comprises front-cover base paper and back-cover base paper or comprised only of one piece of cover base paper (front-cover base paper).

As indicated by the block arrow in FIG. 2, the front-cover base paper (first board base paper) 21, which is a surface material, is conveyed on a production line along the Y-axis from right to left. Also, the back-cover base paper (second board base paper) 26 is supplied and conveyed. Here, as described above, a gypsum board may be manufactured using only the front-cover base paper 21 and without using the back-cover base paper 26. In such case, the back-cover base paper 26 would not be supplied and conveyed.

A mixer 22, which produces and supplies gypsum slurry, may be disposed at a predetermined position relative to a conveying line, e.g., above or beside the conveying line. The mixer 22 can produce gypsum slurry by kneading raw materials of the gypsum slurry including calcined gypsum, water, and optionally, additives.

Here, solid materials such as gypsum slurry may be mixed and agitated beforehand, and the resulting mixture, i.e., a gypsum composition may be supplied to the mixer 22. Also, the number of mixers 22 is not limited to one, and two or more mixers 22 may be used.

The front-cover base paper 21 is conveyed in the same conveying direction. On the other hand, the conveying direction of the back-cover base paper 26 is changed by direction-changing rollers 28A and 28B to the direction of the conveying line of the front-cover base paper 21. Then, both of the front-cover base paper 21 and the back-cover base paper 26 reach a molding machine 29 where a molding step is performed. First, a first gypsum slurry 24 is supplied from the mixer 22 via a pipe line 226 to a space between the front-cover base paper 21 and the back-cover base paper 26.

Next, the front-cover base paper 21 may be bent along multiple bending lines parallel to the longitudinal direction (the Y-axis direction in the figure) such that ends of the front-cover base paper 21 in the width direction (the X-axis direction in the figure) extend around to the upper side of the first gypsum slurry 24. Then, the molding machine 29 may mold a plate-shaped molded body including the front-cover base paper 21, the first gypsum slurry 24, and the back-cover base paper 26. When the gypsum slurry of the gypsum core in the molded body hardens, the molded body can be used as a gypsum board.

When a gypsum board is manufactured, as described above, gypsum slurry is normally placed on cover base paper to be disposed on the front side of the gypsum board, and the cover base paper is bent to form the gypsum board. Accordingly, in the process of manufacturing a gypsum board, in a cross section orthogonal to the longitudinal direction of the molded body, the molded body may be oriented such that a side corresponding to the front side of the gypsum board faces downward, and a side corresponding to the back side of the gypsum board faces upward. For this reason, in the descriptions below, the side corresponding to the back side of the gypsum board may be referred to as the upper side of the gypsum slurry or the upper side of the gypsum core.

In an embodiment not covered by the invention, when the back-cover base paper 26 is not used and only the front-cover base paper 21 is used, the front-cover base paper 21 may be bent along multiple bending lines parallel to the longitudinal direction (the Y-axis direction in the figure) such that end portions of the front-cover base paper 21 in the width direction (the X-axis direction in the figure) cover the upper side of the first gypsum slurry 24 and overlap each other. Then, the molding machine 29 may mold a plate-shaped molded body including the front-cover base paper 21 and the first gypsum slurry 24.

The width of the gypsum board manufactured by the gypsum board manufacturing method of the present embodiment is, for example, but is not limited to, greater than or equal to 400 mm and less than or equal to 1280 mm. The width of the molded body may correspond to the width of the gypsum board to be manufactured.

In any case, on the back surface of an obtained molded body, the distance between a step formed by the overlap of cover base paper and an end of the molded body in the width direction is preferably adjusted to match the length corresponding to a base part to be bonded. For example, the distance between the step and the end of the molded body in the width direction may be adjusted to be greater than or equal to 15 mm, preferably adjusted to be greater than or equal to 19 mm, more preferably adjusted to be greater than or equal to 22.5 mm, and further preferably adjusted to be greater than or equal to 40 mm. The distance is particularly preferably adjusted to be greater than or equal to 50 mm.

The distance between the step and the end of the molded body in the width direction may also be adjusted depending on, for example, a base part to which an obtained gypsum board is fixed. In this case, the distance between the step and the end of the molded body in the width direction is preferably adjusted to be greater than or equal to one half of the width of a base part that is to be disposed along the longitudinal direction of the molded body turned into a gypsum board and to be brought into contact with a portion of the molded body between the step and the end of the molded body in the width direction.

The term "base part" indicates various types of base parts for fixing a gypsum board, and indicates one or more parts selected from, for example, a rabbet-joint bar, a stud, a support, and a furring.

A distance of 15 mm is one half of 30 mm, which is the width of a support or a furring, a distance of 19 mm is one half of 38 mm, which is the width of a frame material for 2x4 construction, and a distance of 22.5 mm is one half of 45 mm, which is the width of a C stud. Thus, the gypsum board can be properly joined to a base part by setting the distance between the step and the end of the molded body in the width direction within one of the preferable ranges described above.

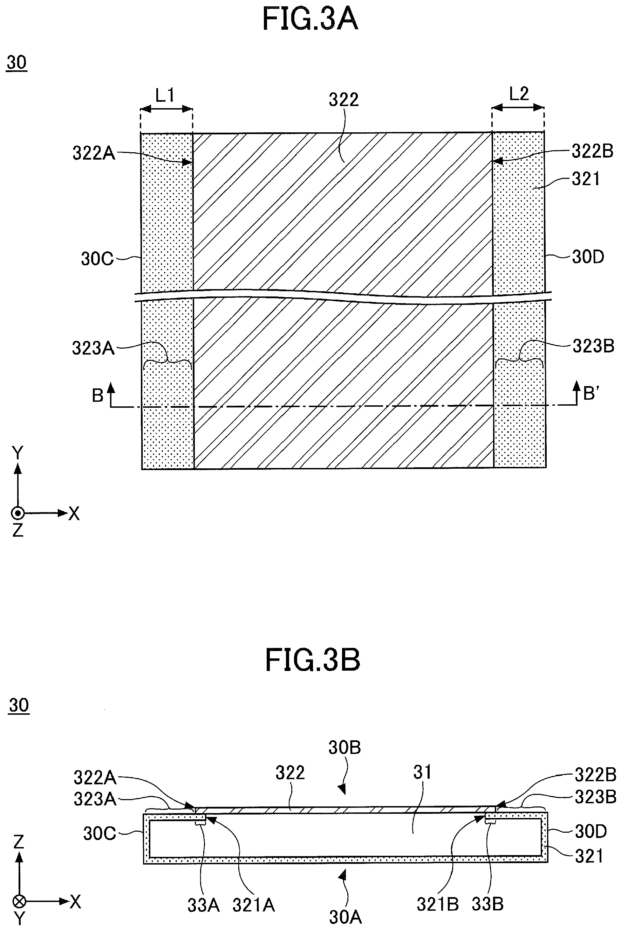

On the back surface of the obtained molded body, the distance between the step formed by the overlap of cover base paper and the end of the molded body in the width direction indicates a distance between the step and one of two ends of the molded body in the width direction which is closer to the step. Accordingly, in the example illustrated in FIGs. 3A and 3B described later, a distance L1 between a side 322A, which is an end of back-cover base paper 322 in the width direction and forms a step, and an end 30C of a molded body 30 in the width direction is preferably within one of the ranges described above. Similarly, in the example illustrated in FIGs. 3A and 3B, a distance L2 between a side 322B, which is an end of the back-cover base paper 322 in the width direction and forms a step, and an end 30D of the molded body 30 in the width direction is preferably within one of the ranges described above.

As described above, on the back surface of a gypsum board, the paper-overlap portion including a step becomes less smooth than other portions. Therefore, the paper-overlap portion tends to become thicker or thinner than other portions. Accordingly, placing the step formed by the overlap of the cover base paper at a position that is 15 mm or more away from the end of the obtained molded body in the width direction makes it possible to provide a sufficient distance between a lateral end of a gypsum board obtained by hardening the gypsum slurry in the molded body and the paper-overlap portion including the step. This in turn makes it possible to flatten a portion near the end of the gypsum board in the width direction. Flattening the end portion of the gypsum board in the width direction makes it possible to attach a base part such as a bar or a stud to the flat portion at the end of the gypsum board in the width direction and thereby makes it possible to sufficiently increase the bonding strength between the base part and the gypsum board.

The upper limit of the distance between the step formed by the overlap of the cover base paper and the end of the obtained molded body in the width direction may be selected depending on the width of the molded body and is not limited to a specific value.

The step formed by the overlap of the cover base paper may also be placed at the end of the molded body in the width direction. That is, the distance between the step and the end of the molded body in the width direction may be set at zero. With this configuration, the step is disposed at the end in the width direction of a gypsum board obtained by hardening the gypsum slurry in the molded body. This makes it possible to form a flat back surface of the gypsum board which has no step. This in turn makes it possible to attach a base part such as a bar or a stud to the flat portion, and thereby makes it possible to sufficiently increase the bonding strength between the base part and the gypsum board.

A first configuration example of a molded body obtained by the molding step of the gypsum board manufacturing method according to the present embodiment is described with reference to FIGs. 3A and 3B. FIG. 3A is a top view of a back surface 30B of the molded body 30. FIG. 3B is a cross-sectional view taken along line B-B' in FIG. 3A. In FIGs. 3A and 3B, the X-axis direction is the width direction of the molded body 30, the Y-axis direction is the longitudinal direction of the molded body 30, and the Z-axis direction is the thickness direction of the molded body 30.

A gypsum board is made by hardening gypsum slurry of the gypsum core 31 in the molded body 30 produced at the molding step. Therefore, the molded body before the gypsum slurry of the gypsum core 31 is hardened and the gypsum board that is the molded body after the gypsum slurry of the gypsum core 31 is hardened are different from each other only in the state of the gypsum slurry, and both of them have the configuration of the molded body 30 illustrated in FIGs. 3A and 3B.

The molded body 30 obtained at the molding step may have a structure where front-cover base paper (first board base paper) 321 and back-cover base paper (second board base paper) 322 are disposed on the surface of the gypsum core 31 formed by molding the gypsum slurry.

Immediately after the molded body 30 is produced, the gypsum slurry is not hardened or only a very small portion of the gypsum slurry is hardened, and therefore the gypsum core 31 is composed essentially of gypsum slurry and is a molded product of unhardened gypsum slurry. However, as described above, the molded product of the gypsum slurry of the gypsum core 31 gradually hardens and becomes a hardened body, and the molded body 30 becomes a gypsum board. Thus, the gypsum core 31 of the molded body 30 may be in any state selected from the following three states: a molded product of unhardened gypsum slurry, a hardened body of a molded product of gypsum slurry, and a transitional intermediate body between a molded product of unhardened gypsum slurry and a hardened body of a molded product of gypsum slurry.

The front-cover base paper 321 mainly constitutes a front surface 30A of the molded body 30, and the back-cover base paper 322 constitutes a back surface 30B of the molded body 30. As described above, the front-cover base paper 321 is bent along multiple bending lines that are parallel to the longitudinal direction of the molded body 30 such that ends of the front-cover base paper 321 in the width direction (the X-axis direction) extend around to the upper side of the gypsum core 31. Accordingly, a side 321A and a side 321B, which are the ends of the front-cover base paper 321 in the width direction, are disposed on the upper side of the gypsum core 31.

On the back surface 30B, the back-cover base paper 322 is disposed above the gypsum core 31 and the front-cover base paper 321 and forms paper-overlap portions 33A and 33B together with the front-cover base paper 321.

When the front-cover base paper 321 and the back-cover base paper 322 are used in this manner, a side 322A and a side 322B, which are the ends of the back-cover base paper 322 in the width direction, become steps formed by the overlap of the cover base paper. For this reason, in the molded body 30, distances L1 and L2 between the respective sides 322A and 322B, i.e., the steps, which are the ends in the width direction of the back-cover base paper 322 on the back surface, and the ends 30C and 30D of the molded body 30 in the width direction become greater than or equal to 15 mm. In other words, in the case of the molded body 30 illustrated in FIGs. 3A and 3B, the width of each of an area 323A and an area 323B of the back surface 30B, where the front-cover base paper 321 is exposed, is greater than or equal to 15 mm. As described above, the width of the area 323A and the area 323B is preferably greater than or equal to 19 mm, more preferably greater than or equal to 22.5 mm, further preferably greater than or equal to 40 mm, and particularly preferably greater than or equal to 50 mm.

The width of the areas 323A and 323B may also be adjusted depending on, for example, a base part. In this case, the width of the areas 323A and 323B is preferably adjusted to be greater than or equal to one half of the width of base parts that are disposed along the longitudinal direction of a gypsum board obtained by hardening gypsum slurry of the gypsum core and to be brought into contact with the respective areas.

On the back surface of the molded body 30, the distance L1 between the side 322A, which is the end of the back-cover base paper 322 in the width direction, and the end 30C of the molded body 30 in the width direction is not necessarily the same as the distance L2 between the side 322B and the end 30D of the molded body 30 in the width direction, and each of the distances L1 and L2 preferably satisfies one of the above-described ranges. Also, the upper limits of the distances L1 and L2 are not limited to specific values.

With the configuration described above, the paper-overlap portions 33A and 33B including the steps on the back surface 30B of the molded body 30 are formed at positions shifted toward the center of the back surface 30B of the molded body 30 in the width direction. Therefore, with the gypsum board that is the molded body 30 whose gypsum slurry has hardened, when base parts such as bars or studs are disposed on the end portions of the back surface of the gypsum board in the width direction, along the longitudinal direction of the gypsum board, it is possible to place and fix the base parts on flat surfaces in areas including no step. This in turn makes it possible to increase the bonding strength between the base parts and the gypsum board.

As described with reference to FIGs. 3A and 3B, when the molded body 30 includes the front-cover base paper 321 and the back-cover base paper 322 as cover base paper, in the molding step, gypsum slurry may be placed on the front-cover base paper 321, and the front-cover base paper 321 may be bent such that the ends of the front-cover base paper 321 in the width direction extend around to the upper side of the gypsum slurry. Then, the back-cover base paper 322 may be placed on the gypsum slurry to overlap portions of the front-cover base paper 321 extending around to the upper side of the gypsum slurry to form the plate-shaped molded body 30 including the front-cover base paper 321, the gypsum slurry, and the back-cover base paper 322.

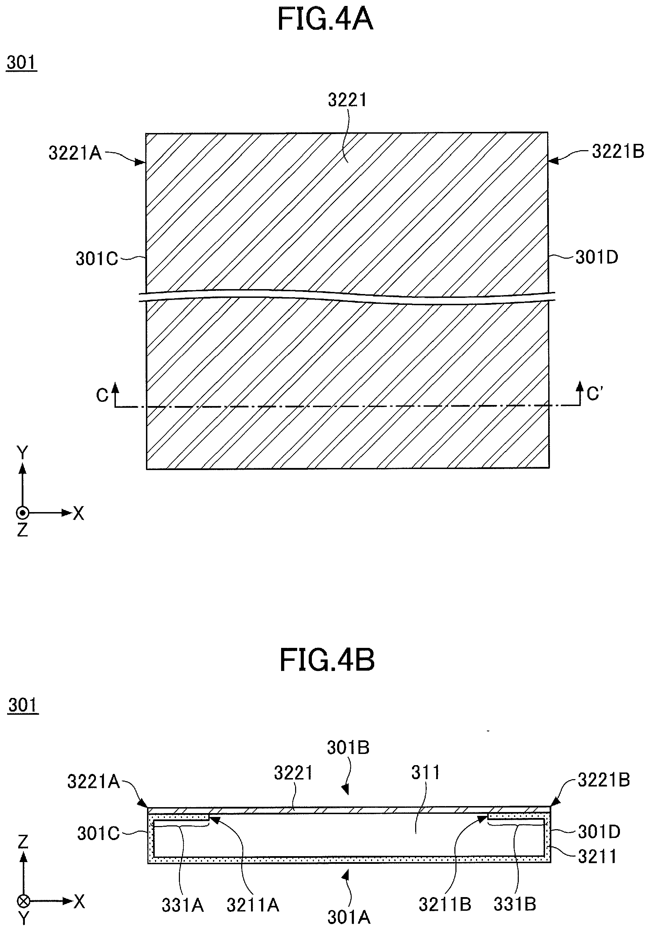

Next, a second configuration example of a molded body obtained by the molding step of the gypsum board manufacturing method according to an embodiment not forming part of the claimed invention is described with reference to FIGs. 4A and 4B. A molded body 301 illustrated in FIGs. 4A and 4B differs from the molded body 30 illustrated in FIGs. 3A and 3B in that the ends of the back-cover base paper 322 in the width direction are disposed at the ends of the gypsum board in the width direction, and is a variation of the molded body 30 illustrated in FIGs. 3A and 3B.

FIG. 4A is a top view of a back surface 301B of the molded body 301. FIG. 4B is a cross-sectional view taken along line C-C' in FIG. 4A. In FIGs. 4A and 4B, the X-axis direction is the width direction of the molded body 301, the Y-axis direction is the longitudinal direction of the molded body 301, and the Z-axis direction is the thickness direction of the molded body 301.

A gypsum board is made by hardening gypsum slurry of a gypsum core 311 in the molded body 301 produced at the molding step. Therefore, the molded body before the gypsum slurry of the gypsum core 311 is hardened and the gypsum board that is the molded body after the gypsum slurry of the gypsum core 311 is hardened are different from each other only in the state of the gypsum slurry, and both of them have the configuration of the molded body 301 illustrated in FIGs. 4A and 4B.

The molded body 301 obtained at the molding step may have a structure where front-cover base paper (first board base paper) 3211 and back-cover base paper (second board base paper) 3221 are disposed on the surface of the gypsum core 311 formed by molding the gypsum slurry.

Immediately after the molded body 301 is produced, the gypsum slurry is not hardened or only a very small portion of the gypsum slurry is hardened, and therefore the gypsum core 311 is composed essentially of gypsum slurry and is a molded product of unhardened gypsum slurry. However, as described above, the molded product of the gypsum slurry of the gypsum core 311 gradually hardens and becomes a hardened body, and the molded body 301 becomes a gypsum board. Thus, the gypsum core 311 of the molded body 301 may be in any state selected from the following three states: a molded product of unhardened gypsum slurry, a hardened body of a molded product of gypsum slurry, and a transitional intermediate body between a molded product of unhardened gypsum slurry and a hardened body of a molded product of gypsum slurry.

The front-cover base paper 3211 mainly constitutes a front surface 301A of the molded body 301, and the back-cover base paper 3221 constitutes a back surface 301B of the molded body 301. As described above, the front-cover base paper 3211 is bent along multiple folding lines that are parallel to the longitudinal direction of the molded body 301 such that ends of the front-cover base paper 3211 in the width direction (the X-axis direction) extend around to the upper side of the gypsum core 311. Accordingly, a side 3211A and a side 3211B, which are the ends of the front-cover base paper 3211 in the width direction, are disposed on the upper side of the gypsum core 311.

On the back surface 301B, the back-cover base paper 3221 is disposed above the gypsum core 311 and the front-cover base paper 3211 and forms paper-overlap portions 331A and 331B together with the front-cover base paper 321.

However, in the case of the molded body 301 illustrated in FIGs. 4A and 4B, the sides 3221A and 3221B, which are the ends of the back-cover base paper 3221 in the width direction, are positioned at ends 301C and 301D of the molded body 301 in the width direction. That is, the distance between each of the sides 3221A and 3221B, which are the ends of the back-cover base paper 3221 in the width direction, and the corresponding one of the ends 301C and 301D of the molded body 301 in the width direction is zero.

With the above configuration, no step is formed on the back surface 301B of the molded body 301. Therefore, with the gypsum board that is the molded body 301 whose gypsum slurry has hardened, when base parts such as bars or studs are disposed on the end portions of the back surface of the gypsum board in the width direction, along the longitudinal direction of the gypsum board, it is possible to place and fix the base parts on flat surfaces in areas including no step. This in turn makes it possible to increase the bonding strength between the base parts and the gypsum board.

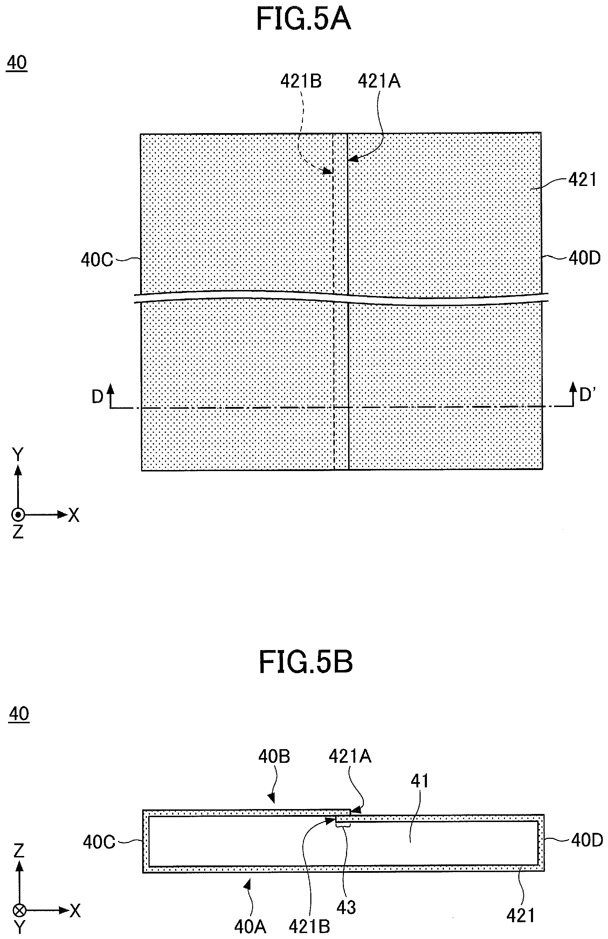

A third configuration example of a molded body obtained by the molding step of the gypsum board manufacturing method not forming part of the claimed invention is described with reference to FIGs. 5A and 5B.

Here, as described above, a molded body may be manufactured using only front-cover base paper and without using back-cover base paper as board base paper. A configuration example in this case is described with reference to FIGs. 5A and 5B.

FIG. 5A is a top view of a back surface 40B of a molded body 40. FIG. 5B is a cross-sectional view taken along line D-D' in FIG. 5A. In FIGs. 5A and 5B, the X-axis direction is the width direction of the molded body 40, the Y-axis direction is the longitudinal direction of the molded body 40, and the Z-axis direction is the thickness direction of the molded body 40.

A gypsum board is made by hardening gypsum slurry of a gypsum core 41 in the molded body 40 produced at the molding step. Therefore, the molded body before the gypsum slurry of the gypsum core 41 is hardened and the gypsum board that is the molded body after the gypsum slurry of the gypsum core 41 is hardened are different from each other only in the state of the gypsum slurry, and both of them have the configuration of the molded body 40 illustrated in FIGs. 5A and 5B.

The molded body 40 obtained at the molding step may have a structure where the surface of the gypsum core 41 formed by molding gypsum slurry is covered with front-cover base paper 421.

Also in this case, the gypsum slurry is not hardened or only a very small portion of the gypsum slurry is hardened immediately after the molded body 40 is produced, and therefore the gypsum core 41 is composed essentially of gypsum slurry and is a molded body of unhardened gypsum slurry. However, the molded product of the gypsum slurry of the gypsum core 41 gradually hardens and becomes a hardened body, and the molded body 40 becomes a gypsum board. Thus, the gypsum core 41 of the molded body 40 may be in any state selected from the following three states: a molded product of unhardened gypsum slurry, a hardened body of a molded product of gypsum slurry, and a transitional intermediate body between a molded product of unhardened gypsum slurry and a hardened body of a molded product of gypsum slurry.

The front-cover base paper 421 forms a front surface 40A and a back surface 40B of the molded body 40. As described above, the front-cover base paper 421 is bent along multiple folding lines that are parallel to the longitudinal direction of the molded body 40 such that end portions of the front-cover base paper 421 in the width direction (the X-axis direction) cover the upper side of the gypsum core 41. Accordingly, a side 421A and a side 421B, which are the ends of the front-cover base paper 421 in the width direction, are disposed on the upper side of the gypsum core 41. In this case, the side 421A and the side 421B overlap each other to form a paper-overlap portion 43. That is, in the molded body 40, the front-cover base paper 421 may be configured to wrap the peripheral surface of the gypsum core 41 in the width direction.

When only the front-cover base paper 421 is used as described above, a side 421A and a side 421B, which are the ends of the front-cover base paper 421 in the width direction, become steps formed by the overlap of the cover base paper. Therefore, as described above, the side 421A and the side 421B, i.e., the steps, which are the ends of the front-cover base paper 421 in the width direction, can be positioned apart from ends 40C and 40D of the molded body 40 by a distance greater than or equal to 15 mm. The distance is preferably greater than or equal to 19 mm, more preferably greater than or equal to 22.5 mm, further preferably greater than or equal to 40 mm, and particularly preferably greater than or equal to 50 mm.

The distance between the step and the end of the molded body in the width direction may also be adjusted depending on, for example, a base part. In this case, the distance between the step and the end of the molded body in the width direction is preferably adjusted to be greater than or equal to one half of the width of a base part that is to be disposed along the longitudinal direction of the gypsum board obtained by hardening gypsum slurry and to be brought into contact with a portion of the molded body between the step and the end of the molded body in the width direction.

With the configuration described above, a paper-overlap portion 43 formed by the lateral ends of the front-cover base paper 421 on the back surface 40B of the molded body 40, i.e., the side 421A and the side 421B, is formed in the middle of the back surface 40B of the molded body 40 in the width direction. Therefore, with the gypsum board that is the molded body 40 whose gypsum slurry has hardened, when base parts such as bars or studs are disposed on the end portions of the back surface of the gypsum board in the width direction, along the longitudinal direction of the gypsum board, it is possible to place and fix the base parts on flat surfaces in areas including no step. This in turn makes it possible to increase the bonding strength between the base parts and the gypsum board.

The upper limit of the distance between each of the sides 421A and 421B, which are the ends of the front-cover base paper 421 in the width direction, and one of the ends 40C and 40D of the molded body 40 in the width direction may be selected based on the width of the molded body and is not limited to a specific value.

As described with reference to FIGs. 5A and 5B, when the gypsum board is manufactured using only the front-cover base paper 421, in the molding step, the gypsum slurry may be placed on the front-cover base paper 421 used as cover base paper, and the front-cover base paper 421 may be bent such that the ends of the front-cover base paper 421 in the width direction extend around to the upper side of the gypsum slurry, and portions of the front-cover base paper 421 extending around to the upper side of the gypsum slurry overlap each other. Thus, the plate-shaped molded body 40 including the front-cover base paper 421 and the gypsum slurry can be formed.

The molding step may be modified to have any other configuration as necessary. For example, the molding step may be configured to form gypsum slurry in the molded body by stacking layers of gypsum slurry with different densities along the thickness direction (the Z-axis direction in FIG. 2) of the molded body.

In this case, gypsum slurry with a desired density can be obtained by, for example, adding foam to the gypsum slurry from dispensing ports 221, 222, and 225 and adjusting the amount of foam to be added. For example, by adjusting the amount of foam to be added, first gypsum slurry 24 and second gypsum slurry 23 with different densities can be prepared.

The obtained second gypsum slurry 23 is supplied via delivery pipes 223 and 224 onto the front-cover base paper 21 and the back-cover base paper 26 at positions upstream of roll coaters 25 in their conveying directions.

Here, 271, 272, and 273 in FIG. 2 indicate an application roll, a backing roll, and a residue removing roll, respectively. The second gypsum slurry 23 on each of the front-cover base paper 21 and the back-cover base paper 26 reaches a spreader implemented by the roll coater 25, and is spread by the spreader. As a result, a thin layer of the second gypsum slurry 23 is formed on the front-cover base paper 21. Similarly, a thin layer of the second gypsum slurry 23 is formed on the back-cover base paper 26. In the example of FIG. 2, the second gypsum slurry 23 is applied to the front-cover base paper 21 and the back-cover base paper 26 by using the roll coaters 25. However, the present invention is not limited to this example. For example, the second gypsum slurry 23 may be applied to only one of the front-cover base paper 21 and the back-cover base paper 26 by using the roll coater 25. Also, the second gypsum slurry 23 may be applied only to partial areas along the side edges of the front-cover base paper 21.

When the back-cover base paper 26 is not used as described above, the second gypsum slurry may be applied only to the front-cover base paper 21.

In the example of FIG. 2, the first gypsum slurry 24 and the second gypsum slurry 23 are prepared using one mixer 22. However, two mixers may be provided, and the first gypsum slurry 24 and the second gypsum slurry 23 may be prepared using the corresponding mixers.

Also, instead of using the first gypsum slurry and the second gypsum slurry, one type of gypsum slurry with a given density may be produced and supplied onto the front-cover base paper. Further, three or more types of gypsum slurry with different densities may be produced and supplied onto the front-cover base paper.

The gypsum board manufacturing method of the present embodiment may also include any step other than the molding step described above.

For example, the gypsum board manufacturing method may include a kneading step of preparing gypsum slurry.

In the kneading step, raw materials including calcined gypsum and water can be kneaded.

Calcined gypsum included in the raw materials is also called calcium sulfate hemihydrate, and is an inorganic composition having a hydraulic property. As calcined gypsum for the gypsum board manufacturing method of the present embodiment, one or both of α -calcined gypsum and β-calcined gypsum may be used. The α-calcined gypsum and the β-calcined gypsum may be obtained by calcining, in the atmosphere or water (or vapor), one of or a mixture of, for example, natural gypsum, by-product gypsum, flue-gas desulfurized gypsum, and gypsum board waste. Also, calcined gypsum used for the gypsum board manufacturing method of the present embodiment may include type III anhydrous gypsum that is generated in minute quantities when the calcined gypsum is obtained.

To manufacture α-calcined gypsum, it is necessary to pressure-sinter dihydrate gypsum such as natural gypsum in water or steam by using an autoclave. Also, β-calcined gypsum can be manufactured by pressureless sintering of dihydrate gypsum, such as natural gypsum, in the atmosphere.

Next, water to be added when preparing gypsum slurry is described.

Water may be added to produce gypsum slurry by kneading calcined gypsum. The amount of water added to produce gypsum slurry is not limited to any specific value, and may be determined according to, for example, required fluidity.

The materials of gypsum slurry may include any component in addition to gypsum and water described above.

For example, as described above, foam may be added to form gypsum slurry. The specific gravity of an obtained gypsum board may be set within a desired range by adjusting the amount of foam added.

Any method may be used to add foam to form gypsum slurry. For example, gypsum slurry including bubbles may be formed by adding a blowing agent (foaming agent) to water (water for bubble formation) in advance, forming bubbles by agitating the water while introducing air, and mixing the formed bubbles with calcined gypsum and water (water for kneading gypsum slurry). Alternatively, foam-added gypsum slurry may be prepared by adding formed bubbles to gypsum slurry formed by mixing calcined gypsum with water in advance.

Examples of blowing agents used to form bubbles include, but are not limited to, sodium alkylsulfate, alkyl ether sulfate, sodium alkylbenzene sulfonate, and polyoxyethylene alkyl sulfate.

The amount of foam to be added is not limited to any specific value, and may be selected depending on the specific gravity required for a gypsum board to be manufactured.

Various types of additives that are typically added to materials of hardened gypsum may also be added to the materials of gypsum slurry. Examples of such additives include an adhesion improver such as starch or polyvinyl alcohol for improving the adhesion between a covering material and a gypsum core; inorganic fibers such as glass fibers; lightweight aggregate; a refractory such as vermiculite; a setting modifier; a water-reducing agent; a bubble-diameter adjuster such as sulfosuccinate surfactant; and a water repellent such as silicone or paraffin.

When gypsum slurry is prepared by kneading a raw material, all components of the raw material may be kneaded at once or may be kneaded in multiple steps. For example, gypsum slurry may be prepared by mixing and kneading solid components of the raw material to form a gypsum composition and by further kneading the obtained gypsum composition after adding a liquid component of the raw material such as water.

Any tool may be used to knead the raw material. For example, a mixer may be used as described with reference to FIG. 2.

The gypsum board manufacturing method of the present embodiment may also include a hardening step of hardening gypsum slurry. That is, the gypsum board manufacturing method may include a hardening step of hardening the gypsum slurry included in a gypsum core of a molded body.

In the hardening step, acicular crystals of dihydrate gypsum are formed due to hydration reaction and as a result, calcined gypsum (hemihydrate gypsum) in gypsum slurry sets and solidifies. Thus, in the gypsum core of the molded body formed in the molding step, calcined gypsum and water in the gypsum slurry react with each other, the hydration reaction of the calcined gypsum proceeds, and as a result the hardening step is performed.

The gypsum board manufacturing method of the present embodiment may further include steps such as a rough cutting step, a drying step, a cutting step, and a loading step, as necessary.

For example, after the molding step and during or after the hardening step, a rough cutting step may be performed to roughly cut the molded body molded at the molding step using a rough cutter. In the rough cutting step, a continuous molded body formed at the molding step may be cut into pieces with a predetermined length by using a rough cutter.

Also, a drying process may be performed to remove excess water from the molded body formed at the molding step or from the molded body roughly cut at the rough cutting process. A molded body that has gone through the hardening step may be supplied to the drying step. The drying step may be performed by forcibly drying the molded body using a dryer.

Any method may be used to forcibly dry the molded body using a dryer. For example, a dryer may be provided on a conveying path of the molded body, and the molded body may be dried continuously by passing the molded body through the dryer. Alternatively, a batch of molded bodies may be carried into a dryer to simultaneously dry the molded bodies in the same batch.

Further, for example, a cutting step may be performed to cut a dried molded body into products with a predetermined length, and a loading step may be performed to stack the obtained gypsum boards on a lifter to store the gypsum boards in a warehouse or to load the gypsum boards on a lifter for shipping.

Further, the gypsum board manufacturing method of the present embodiment may include a base part fixing step that is performed after the hardening step to join a base part such as a bar to the obtained gypsum board. For example, the gypsum board manufacturing method of the present embodiment may include, as the base part fixing step, a bar attaching step of fixing a bar to the obtained gypsum board.

In the bar attaching step, a bar (vertical bar) can be disposed on and fixed to the obtained gypsum board along the longitudinal direction of the obtained gypsum board.

At this step, the bonding surface of the gypsum board to which the bar is bonded is preferably located between the step described above and an end of the gypsum board in the width direction.

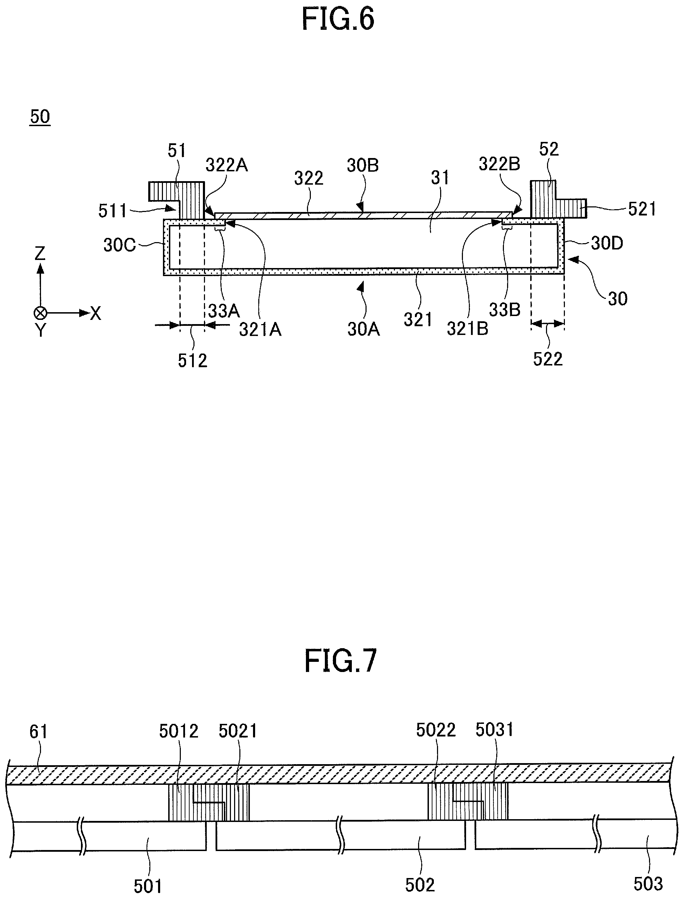

A rabbet-joint gypsum board on which bars are placed and fixed is described with reference to FIG. 6. FIG. 6 illustrates a cross-section of a rabbet-joint gypsum board 50. FIG. 6 illustrates an example in which rabbet-joint bars are placed on and fixed to a gypsum board obtained by hardening gypsum slurry in the gypsum core 31 of the molded body 30 illustrated in FIGs. 3A and 3B. That is, FIG. 6 illustrates an example in which rabbet-joint bars are placed on and fixed to the molded body 30 that has become a gypsum board. For this reason, the same reference numbers are assigned to the corresponding components, and descriptions of some of the components are omitted.

As illustrated in FIG. 6, bars 51 and 52 may be disposed near the lateral ends 30C and 30D of the molded body 30 that has become a gypsum board. The bar 51 may be shaped to form a recess 511 between the bar 51 and the molded body 30 that has become the gypsum board along the longitudinal direction (the Y-axis direction) of the gypsum board, and the bar 52 may be shaped to form a protrusion 521 along the longitudinal direction of the gypsum board. Therefore, the cross-sectional shape of each of the bars 51 and 52 in a plane orthogonal to the longitudinal direction (the Y-axis direction) of the molded body 30 as the gypsum board is preferably the same regardless of the position in the longitudinal direction.

As is described later, the rabbet-joint gypsum board may be assembled with an adjacent rabbet-joint gypsum board by fitting the recess formed by the bar on one of the rabbet-joint gypsum boards and the protrusion of the bar on the other one of the rabbet-joint gypsum boards together. Accordingly, as long as a protrusion and a recess are formed along the longitudinal direction at one end and the other end of the rabbet-joint gypsum board in the width direction, the shape of the bar is not limited to any specific shape.

When the bars 51 and 52 are placed, bonding surfaces 512 and 522 of the bars 51 and 52 to be bonded to the molded body 30 that has become the gypsum board are preferably located between the steps formed by the overlap of the cover base paper, i.e., the side 322A and the side 322B that are the lateral ends of the back-cover base paper 322, and the lateral ends 30C and 30D of the molded body 30 that has become the gypsum board.

A step formed by the overlap of cover base paper is shifted toward the center of the gypsum board in the width direction or disposed at an end of the gypsum board in the width direction. This configuration makes it possible to increase the area between the step formed by the overlap of the cover base paper and the lateral end of the molded body that has become the gypsum board. Alternatively, the step may be positioned at a lateral end of the molded body that has become the gypsum board. Accordingly, the above configuration makes it possible to place the bonding surface between the bar and the molded body that has become the gypsum board in a flat portion including no step, and thereby makes it possible to sufficiently increase the bonding strength between the bar and the molded body that has become the gypsum board.

Here, any means may be used to place and fix the bar on the molded body that has become the gypsum board. For example, the bar may be fixed using various types of adhesives.

In the example described above, the bar is fixed to the gypsum board. However, the above description may also be applied to a case where another type of base part such as a stud is bonded to the gypsum board.

In the example of FIG. 6, the bar 51 and the bar 52 are placed on the molded body 30 that has become a gypsum board as a result of hardening the gypsum slurry in the gypsum core 31 of the molded body 30 illustrated in FIGs. 3A and 3B. For example, bars may also be placed in a similar manner on the molded body 40 that has become a gypsum board as a result of hardening the gypsum slurry in the gypsum core 41 of the molded body 40 illustrated in FIGs. 5A and 5B.

Further, bars may also be placed on the molded body 301 that has become a gypsum board as a result of hardening the gypsum slurry in the gypsum core 311 of the molded body 301 illustrated in FIGs. 4A and 4B. However, in this case, because the back surface of the molded body 301 that has become a gypsum board is flat and includes no step, the bars can be placed in various positions depending on the use of the gypsum board.

In the above example, bars are disposed along the longitudinal direction of the gypsum board. However, in the bar attaching step, additional bars may be provided along the width direction of the gypsum board as necessary.

Rabbet-joint gypsum boards obtained after the bar attaching step can be assembled as exemplified in FIG. 7. In FIG. 7, the protrusion of a bar 5012 of a gypsum board 501 and the recess of a bar 5021 of a gypsum board 502 are fitted together. Also, for example, the protrusion of a bar 5022 of the gypsum board 502 and the recess of a bar 5031 of a gypsum board 503 can be fitted together. Thus, rabbet-joint gypsum boards can be assembled to form, for example, a ceiling surface by fitting the recess and the protrusion of rabbet-joint bars of adjacent rabbet-joint gypsum boards together.

The rabbet-joint gypsum board may be fixed to, for example, a joist 61, and the joist 61 may be fixed to the ceiling via, for example, a suspender (not shown).

Although the bar attaching step is described above as an example, the base part fixing step may also be a step of bonding a base part other than the bar to the gypsum board. In such a case, the gypsum board can be bonded and fixed to a base part according to a method that is suitable for, for example, the material and characteristics of the base part.

As described above, when a gypsum board is used as an interior building material such as a ceiling board, there is a case where a decorative sheet on which patterns are printed is attached to the front surface of the gypsum board to make a decorated gypsum board. Therefore, the gypsum board manufacturing method may include, before the bar attaching step, a decorative sheet attaching step of attaching a decorative sheet to the front surface of the gypsum board, i.e., a surface opposite the surface on which the bars are placed, and/or the side surfaces.

According to the gypsum board manufacturing method of the present embodiment, unlike the related-art method, there is no need to cut off the end portions of the gypsum board in the width direction to attach the bars. Accordingly, the side surfaces at the lateral ends of the gypsum board are covered with the front-cover base paper. This in turn makes it possible to improve the adhesion between the side surfaces and a decorative sheet bonded to the side surfaces, and makes it possible to prevent the decorative sheet from swelling at the side surfaces of the gypsum board.

The gypsum board manufacturing method of the present embodiment not forming part of the present invention described above makes it possible to obtain a gypsum board whose back surface does not include non-smooth portions, i.e., paper-overlap portions including steps near the lateral ends of the gypsum board. This in turn makes it possible to flatten the end portions in the width direction of the back surface of the gypsum board, and thereby makes it possible to increase the bonding strength between the gypsum board and a base part such as a bar or a stud attached to the gypsum board. Thus, the gypsum board manufacturing method of the present embodiment can manufacture a gypsum board that can be properly joined to a base material. The gypsum board manufacturing method of the present embodiment can manufacture a gypsum board that is suitable for, for example, a rabbet-joint gypsum board.<GYPSUM BOARD>

A gypsum board according to an embodiment is described below. The gypsum board according to the present embodiment can be manufactured by the gypsum board manufacturing method described above. Therefore, descriptions of some of the already-described items are omitted here.

The gypsum board of the present embodiment may include hardened gypsum and two pieces of cover base paper disposed to cover at least a part of the surface of the hardened gypsum, and may have a plate shape. In a cross section orthogonal to the longitudinal direction of the hardened gypsum, the cover base paper completely covers the periphery of the hardened gypsum, and portions of the cover base paper overlap each other at two positions. The distance between a step formed by the overlap of the cover base paper and an end of the gypsum board in the width direction may be greater than or equal to 15 mm.

The distance between the step formed by the overlap of the cover base paper and the end of the gypsum board in the width direction is preferably greater than or equal to 19 mm, more preferably greater than or equal to 22.5 mm, and further preferably greater than or equal to 40 mm. The distance is particularly preferably greater than or equal to 50 mm.

The distance between the step and the end of the molded body in the width direction may also be selected depending on, for example, a base part. In this case, the distance between the step and the end of the molded body in the width direction is preferably adjusted to be greater than or equal to one half of the width of a base part that is to be disposed along the longitudinal direction of the molded body turned into a gypsum board and to be brought into contact with a portion of the molded body between the step and the end of the molded body in the width direction.

The term "base part" indicates various types of base parts for fixing a gypsum board, and indicates one or more parts selected from, for example, a rabbet-joint bar, a stud, a support, and a furring.

A distance of 15 mm is one half of 30 mm, which is the width of a support or a furring, a distance of 19 mm is one half of 38 mm, which is the width of a frame material for 2×4 construction, and a distance of 22.5 mm is one half of 45 mm, which is the width of a C stud. Thus, the gypsum board can be properly joined to a base part by setting the distance between the step and the end of the molded body in the width direction within one of the preferable ranges described above.

The gypsum board of the present embodiment not forming part of the claimed invention may include hardened gypsum and cover base paper disposed to cover at least a part of the surface of the hardened gypsum, and may have a plate shape. In a cross section orthogonal to the longitudinal direction of the hardened gypsum, the cover base paper completely covers the periphery of the hardened gypsum, and portions of the cover base paper overlap each other. A step formed by the overlap of the cover base paper may be disposed at an end of the gypsum board in the width direction.

As described above, when the related-art gypsum board is bonded to a base part and if a step formed near the lateral end of the gypsum board is included in a bonding surface to be bonded to the base part, the gypsum board may not sufficiently closely contact the base part, and the bonding strength may be reduced. The term "base part" indicates various types of base parts for fixing a gypsum board, and indicates one or more parts selected from, for example, the above-described rabbet-joint bar, a stud, a support, and a furring.

For this reason, as described above, the distance between the step formed by the overlap of the cover base paper and the end of the gypsum board in the width direction is set at a value greater than or equal to 15 mm. That is, in the gypsum board of the present embodiment, a sufficient distant is provided between the lateral end of the gypsum board and the paper-overlap portion including the step. When a base part disposed along the longitudinal direction of the gypsum board is joined to an end portion of the gypsum board in the width direction, this configuration of the gypsum board of the present embodiment makes it possible to prevent a step formed in the gypsum board by the above-described paper-overlap portion from being included in a joint portion to be joined to the base part. That is, this configuration can prevent the step of the gypsum board from being positioned in a joint surface to be bonded to a base part disposed along the longitudinal direction of the gypsum board.

Also, as described above, in the gypsum board of the present embodiment, a step formed by the overlap of the cover base paper may be disposed at an end of the gypsum board in the width direction. That is, the distance between the step and the end of the gypsum board in the width direction may be set at zero. This configuration of the gypsum board of the present embodiment makes it possible to flatten the back surface. When a base part disposed along the longitudinal direction of the gypsum board is joined to an end portion of the gypsum board in the width direction, this configuration of the gypsum board of the present embodiment makes it possible to prevent a step formed in the gypsum board by the above-described paper-overlap portion from being included in a joint portion to be bonded to the base part. That is, this configuration can prevent the step of the gypsum board from being positioned in a joint surface to be joined to a base part disposed along the longitudinal direction of the gypsum board.

More specifically, the gypsum board of the present embodiment may have, for example, a configuration as described below.

The gypsum board include hardened gypsum and cover base paper disposed to cover at least a part of the surface of the hardened gypsum, and may have a plate shape. Also, the gypsum board includes front-cover base paper and back-cover base paper as the cover base paper. The front-cover base paper and the back-cover base paper can completely cover the periphery of the hardened gypsum in a cross section that is orthogonal to the longitudinal direction of the hardened gypsum. In this case, in the cross section orthogonal to the longitudinal direction of the hardened gypsum, portions of the front-cover base paper and the back-cover base paper may overlap each other at two positions, and the lateral ends of the back-cover base paper may be located at the lateral ends of the gypsum board.

The gypsum board of the present embodiment may have a structure that is obtained, for example, by hardening the gypsum slurry of any one of the gypsum cores 31, 311, and 41 of the molded body 30, the molded body 301, and the molded body 40 illustrated in FIGs. 3A, 3B. Accordingly, the gypsum board of the present embodiment has a shape and a structure that are the same as those of any one of the molded bodies 30 illustrated in FIGs. 3A, 3B .

For example, when the molded body 30 illustrated in FIGs. 3A and 3B has become a gypsum board, the gypsum board includes two pieces of cover base paper, i.e., the front-cover base paper 321 and the back-cover base paper 322. The front-cover base paper 321 mainly constitutes the front surface 30A of the molded body 30 that has become the gypsum board, and the back-cover base paper 322 mainly constitutes the back surface 30B of the molded body 30. Also, the side 321A and the side 321B, which are the ends of the front-cover base paper 321 in the width direction, are disposed on the hardened gypsum core 31.

On the back surface 30B, the back-cover base paper 322 is disposed above the gypsum core 31 and the front-cover base paper 321 and forms the paper-overlap portions 33A and 33B together with the front-cover base paper 321. That is, portions of the front-cover base paper 321 and the back-cover base paper 322 overlap each another at two positions.

In the case where the gypsum board is obtained by hardening the gypsum core 31 of the molded body 30 illustrated in FIGs. 3A and 3B, the front-cover base paper 321 and the back-cover base paper 322 are used, and the side 322A and the side 322B, which are the ends of the back-cover base paper 322 in the width direction, become steps formed by the overlap of the cover base paper. For this reason, in the gypsum board obtained by hardening the gypsum core 31 of the molded body 30, distances L1 and L2 between the respective sides 322A and 322B, i.e., the steps, which are the lateral ends of the back-cover base paper 322 on the back surface, and the lateral ends 30C and 30D of the molded body 30, which has become the gypsum board, are set at values greater than or equal to 15 mm. In other words, in the case of the molded body 30 that has become the gypsum board, the width of each of the area 323A and the area 323B of the back surface 30B, where the front-cover base paper 321 is exposed, is greater than or equal to 15 mm. As described above, the width of the area 323A and the area 323B is preferably greater than or equal to 19 mm, more preferably greater than or equal to 22.5 mm, further preferably greater than or equal to 40 mm, and particularly preferably greater than or equal to 50 mm.

On the back surface of the molded body 30 that has become the gypsum board, the distance L1 between the side 322A, which is an end of the back-cover base paper 322 in the width direction, and the end 30C of the molded body 30 in the width direction is not necessarily the same as the distance L2 between the side 322B and the end 30D of the molded body 30 in the width direction. Each of the distances L1 and L2 preferably satisfies one of the above-described ranges. Also, the upper limits of the distances L1 and L2 are not limited to specific values, and may be determined based on the width of the molded body.

With the configuration described above, the paper-overlap portions 33A and 33B on the back surface 30B of the molded body 30 are formed at positions shifted toward the center of the back surface 30B of the molded body 30 in the width direction. Therefore, in the molded body 30 that has become the gypsum body, when base parts are placed on the end portions of the gypsum board in the width direction, along the longitudinal direction of the gypsum board, it is possible to place and fix the base parts on flat surfaces in areas including no step. This in turn makes it possible to increase the bonding strength between the base parts and the gypsum board.

As another example, not forming part of the claimed invention, when the molded body 301 illustrated in FIGs. 4A and 4B has become a gypsum board, the gypsum board includes two pieces of cover base paper, i.e., the front-cover base paper 3211 and the back-cover base paper 3221. The front-cover base paper 3211 mainly constitutes the front surface 301A of the molded body 301 that has become the gypsum board, and the back-cover base paper 3221 mainly constitutes the back surface 301B of the molded body 301. Also, the side 3211A and the side 3211B, which are the ends of the front-cover base paper 321 in the width direction, are disposed on the hardened gypsum core 311.

On the back surface 301B, the back-cover base paper 3221 is disposed above the gypsum core 311 and the front-cover base paper 3211 and forms the paper-overlap portions 331A and 331B together with the front-cover base paper 3211. That is, portions of the front-cover base paper 3211 and the back-cover base paper 3221 overlap each another at two positions.

In the case of the molded body 301 illustrated in FIGs. 4A and 4B, the sides 3221A and 3221B, which are the ends of the back-cover base paper 3221 in the width direction, are positioned at the ends 301C and 301D of the molded body 301 in the width direction. That is, the distance between each of the sides 3221A and 3221B, which are the lateral ends of the back-cover base paper 3221, and the corresponding one of the lateral ends 301C and 301D of the molded body 301 is zero.

With the above configuration, no step is formed on the back surface 301B of the molded body 301. Therefore, with the gypsum board that is the molded body 301 whose gypsum slurry has hardened, when base parts such as bars or studs are placed on the end portions of the back surface of the gypsum board in the width direction, along the longitudinal direction of the gypsum board, it is possible to place and fix the base parts on flat surfaces in areas including no step. This in turn makes it possible to increase the bonding strength between the base parts and the gypsum board.

When the molded body 40 illustrated in FIGs. 5A and 5B has become a gypsum board, the gypsum board includes one piece of cover base paper, i.e., the front-cover base paper 421. The molded body 40 that has become the gypsum board may have a structure where the surface of the gypsum core 41 formed by molding gypsum slurry is covered with the front-cover base paper 421.

In this case, the front-cover base paper 421 forms the front surface 40A and the back surface 40B of the molded body 40 that has become the gypsum board. The front-cover base paper 421 is bent along multiple folding lines that are parallel to the longitudinal direction of the molded body 40 such that end portions of the front-cover base paper 421 in the width direction (the X-axis direction) cover the upper side of the gypsum core 41. Accordingly, the side 421A and the side 421B, which are the ends of the front-cover base paper 421 in the width direction, are disposed on the upper side of the gypsum core 41. In this case, the side 421A and the side 421B overlap each other to form the paper-overlap portion 43. That is, portions of the front-cover base paper 421 overlap each other at one position and in the molded body 40, the front-cover base paper 421 is configured to wrap the peripheral surface of the gypsum core 41 in the width direction.

When only the front-cover base paper 421 is used as described above, the side 421A and the side 421B, which are the ends of the front-cover base paper 421 in the width direction, become steps formed by the overlap of the cover base paper. Therefore, as described above, the side 421A and the side 421B, i.e., the steps, which are the lateral ends of the front-cover base paper 421, can be positioned apart from the lateral ends 40C and 40D of the molded body 40 that has become the gypsum board by a distance greater than or equal to 15 mm. The distance is preferably greater than or equal to 19 mm, more preferably greater than or equal to 22.5 mm, further preferably greater than or equal to 40 mm, and particularly preferably greater than or equal to 50 mm.

With the configuration described above, the paper-overlap portion 43 formed by the lateral ends of the front-cover base paper 421 on the back surface 40B of the molded body 40, i.e., the side 421A and the side 421B, is positioned near the center of the back surface 40B of the molded body 40 in the width direction. Therefore, in the molded body 40 that has become the gypsum body, when base parts are disposed on the end portions of the gypsum board in the width direction, along the longitudinal direction of the gypsum board, it is possible to place and fix the base parts on flat surfaces in areas including no step. This in turn makes it possible to increase the bonding strength between the base parts and the gypsum board.

The upper limit of the distance between each of the sides 421A and 421B, which are the lateral ends of the front-cover base paper 421, and one of the lateral ends 40C and 40D of the molded body 40 may be selected based on the width of the molded body and is not limited to a specific value.

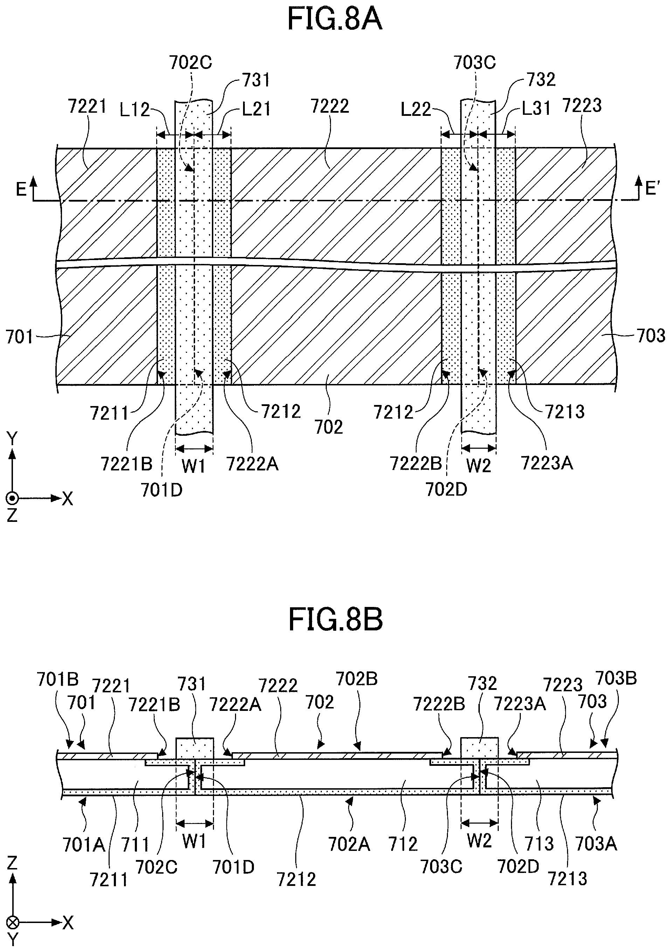

Next, a configuration example of a structure obtained by joining and fixing gypsum boards of the present embodiment to base parts is described with reference to FIGs. 8A and 8B.

FIGs. 8A and 8B illustrate an example of a wall formed by joining and fixing three gypsum boards 701, 702, and 703 to base parts 731 and 732. In FIG. 8A, a wall formed by joining and fixing gypsum boards to base parts is seen from the side of the base parts so that the structure of the wall can be understood. Normally, the surfaces of the gypsum boards opposite the surfaces joined to the base parts become the wall surface. In FIG. 8A, the back surface is the wall surface. FIG. 8B is a cross-sectional view taken along line E-E' in FIG. 8A. In FIGs. 8A and 8B, the X-axis direction is the width direction of the gypsum boards 701, 702, and 703, the Y-axis direction is the longitudinal direction of the gypsum boards 701, 702, and 703, and the Z-axis direction is the thickness direction of the gypsum boards 701, 702, and 703. Each of the gypsum boards 701, 702, and 703 is obtained from the molded body 30 illustrated in FIGs. 3A and 3B.

In the gypsum boards 701, 702, and 703, front-cover base paper 7211, front-cover base paper 7212, front-cover base paper 7213, back-cover base paper 7221, back-cover base paper 7222, and back-cover base paper 7223 are disposed to cover the front and back surfaces of corresponding gypsum cores 711, 712, and 713. The front-cover base paper 7211, the front-cover base paper 7212, and the front-cover base paper 7213 mainly constitute front surfaces 701A, 702A, and 703A of the gypsum boards, respectively. The back-cover base paper 7221, the back-cover base paper 7222, and the back-cover base paper 7223 mainly constitute back surfaces 701B, 702B, and 703B of the gypsum boards, respectively.

Accordingly, in the gypsum boards 701, 702, and 703, sides 7221B, 7222A, 7222B, and 7223A, which are the lateral ends of the back-cover base paper 7221, the back-cover base paper 7222, and the back-cover base paper 7223, are disposed, respectively, on the back surfaces 701B, 702B, and 703B to be joined to the base parts 731 and 732. The back-cover base paper 7221, the back-cover base paper 7222, and the back-cover base paper 7223 form paper-overlap portions together with the front-cover base paper 7211, the front-cover base paper 7212, and the front-cover base paper 7213, and the sides 7221B, 7222A, 7222B, and 7223A, which are the lateral ends of the back-cover base paper 7221, the back-cover base paper 7222, and the back-cover base paper 7223, become steps formed by the overlap of the cover base paper.

The gypsum boards 701, 702, and 703 of the present embodiment are configured such that distances L12, L21, L22, and L31 between the sides 7221B, 7222A, 7222B, and 7223A, i.e., the steps, which are the lateral ends of the pieces of back-cover base paper on the back surface, and the lateral ends 701D, 702C, 702D, and 703C of the gypsum boards become greater than or equal to 15 mm. With this configuration, as illustrated in FIG. 8B, no step is included in the joint portions of the gypsum boards 701, 702, and 703 joined to the base parts 731 and 732, and the base parts can be joined to flat surfaces. This in turn makes it possible to further increase the adhesion and the bonding strength between gypsum boards and the base parts.

As described above, the distances between the steps and the lateral ends of the gypsum boards are preferably greater than or equal to 19 mm, more preferably greater than or equal to 22.5 mm, further preferably greater than or equal to 40 mm, and particularly preferably greater than or equal to 50 mm.

The gypsum board of the present embodiment may also be configured such that the steps are disposed at the lateral ends of the gypsum board. That is, the distances between the steps and the lateral ends of the gypsum board may be set at zero.

Specifically, the gypsum board may be obtained by hardening the gypsum core 311 of the molded body 301 illustrated in FIGs. 4A and 4B.

This configuration makes it possible to place the lateral ends of the back-cover base paper, which correspond to the steps formed by the overlap of the cover base paper, at the lateral ends of the gypsum board.

This in turn makes it possible to form a flat back surface of the gypsum board that includes no step. That is, this configuration makes it possible to join a base part to a flat surface and increase the adhesion between the base part and the gypsum board.

Also, the gypsum board of the present embodiment may be configured by selecting a distance between the step and the lateral end of the gypsum board based on the size of a base part to be attached to the gypsum board.

Specifically, the gypsum board of the present embodiment may include hardened gypsum and cover base paper disposed to cover at least a part of the surface of the hardened gypsum, and may have a plate shape.

In a cross section orthogonal to the longitudinal direction of the hardened gypsum, the cover base paper completely covers the peripheral surface of the hardened gypsum, and portions of the cover base paper overlap each other. The distance between the step formed by the overlap of the cover base paper and the lateral end of the gypsum board may be set at a value greater than or equal to one half of the width of a base part disposed along the longitudinal direction of the gypsum board.

A configuration example of the gypsum board is described with reference to FIGs. 8A and 8B.

In the case of the gypsum board 701, as described above, the side 7221B, which is a lateral end of the back-cover base paper 7221, becomes a step. Also, in the gypsum board 701, the distance L12 between the side 7221B forming a step and the lateral end 701D of the gypsum board 701 may be set at a value that is greater than or equal to one half of a width W1 of the base part 731 disposed along the longitudinal direction of the gypsum board 701, i.e., along the Y-axis direction in the figure.

In the case of the gypsum board 702, the distance L21 between the side 7222A forming a step and the lateral end 702C of the gypsum board 702 may be set at a value that is greater than or equal to one half of the width W1 of the base part 731. Also, the distance L22 between the side 7222B forming a step and 702D, which is a lateral end of the gypsum board 702, may be set at a value greater than or equal to one half of a width W2 of the base part 732.

In the case of the gypsum board 703, the distance L31 between the side 7223A forming a step and the lateral end 703C of the gypsum board 703 may be set at a value that is greater than or equal to one half of the width W2 of the base part 732.

When, for example, a wall is formed by fixing gypsum boards to base parts, as illustrated in FIGs. 8A and 8B, each gypsum board is normally fixed to a base part such that the lateral end of the gypsum board is positioned substantially at the center of the base part in the width direction. For this reason, each of the distances L12, L21, L22, and L31 between the steps on the gypsum boards and the lateral ends of the gypsum boards may be set at a value that is greater than or equal to one half of the corresponding one of the widths W1 and W2 of the base parts 731 and 732 contacting the gypsum boards. This configuration makes it possible to join the base parts to flat portions between the steps and the lateral ends of the gypsum boards, and thereby makes it possible to increase the adhesion between the gypsum boards and the base parts.

The width of the base parts is not limited to any specific value. However, for example, one or more types of base parts selected from a base part with a width of 30 mm, a base part with a width of 38 mm, a base part with width of 45 mm, and a base part with a width of 65 mm may be used.

According to the gypsum board of the present embodiment, as illustrated in FIGs. 8A and 8B, base parts disposed along the longitudinal direction of the gypsum board can be joined to flat portions between the steps and the lateral ends of the gypsum board. This configuration makes it possible to increase the adhesion between the gypsum board and the base part.

When the gypsum board of the present embodiment has a structure obtained by hardening the gypsum slurry of the gypsum core 311 of the molded body 301 illustrated in FIGs. 4A and 4B, the back surface of the gypsum board has no step and becomes flat. That is, this configuration makes it possible to join a base part to a flat surface and increase the adhesion between the gypsum board and the base part.

Accordingly, even when a shearing force is applied by wind or earthquake to, for example, a building including a structure such as a wall formed by the gypsum boards and base parts, the base parts and the gypsum boards are less likely to be displaced from each other. This in turn makes it possible to increase the strength of the structure and the building including the structure.

When gypsum boards are arranged and joined to base parts like the structure illustrated in FIGs. 8A and 8B and if steps are included in portions of the gypsum boards to be joined to the base parts as in the related art, the joints between adjacent gypsum boards may be misaligned. Here, "misalignment" indicates a difference in height between the facing ends of adjacent gypsum boards and an irregularity at the boundary between the gypsum boards.

However, the gypsum board of the present embodiment includes no step in a portion to be joined to a base part disposed along the longitudinal direction of the gypsum board. This makes it possible to prevent the occurrence of misalignment at a joint between adjacent gypsum boards.

In the related art, much extra work is needed for puttying to make the misalignment between the adjacent gypsum boards less noticeable. On the other hand, with the gypsum board of the present embodiment, the occurrence of the misalignment can be suppressed, and the workload of puttying can be reduced. Further, because the occurrence of misalignment can be suppressed by using the gypsum boards of the present embodiment, it is possible to eliminate puttying work and to improve the appearance of the joints.

### <EXAMPLES>

The present embodiment is further described below based on examples. However, the present invention is not limited to the described examples.[EXAMPLE 1]

In Example 1, the molded body illustrated in FIGs. 3A and 3B was prepared and a gypsum board was manufactured from the molded body. Also, bars were placed on the back surface of the gypsum board as illustrated in FIG. 6, and an evaluation was performed.

First, the process used to manufacture the gypsum board is described.

From right to left in FIG. 2, the front-cover base paper 21 was continuously conveyed along the production line.

Gypsum slurry (gypsum mud) was prepared using one mixer 22 by kneading a mixture including 100 parts by weight of gypsum, one part by weight of a setting modifier, 0.3 parts by weight of a water reducing agent, 0.5 parts by weight of an adhesion improver, and 80 parts by weight of water (kneading step).

Then, the gypsum slurry obtained by the mixer 22 was supplied from the dispensing ports 221 and 222 via the delivery pipes 223 and 224 onto the front-cover base paper 21 and the back-cover base paper 26 at positions upstream of the roll coaters 25 in the conveyance direction.

The second gypsum slurry 23 on each of the front-cover base paper 21 and the back-cover base paper 26 reaches a spreader implemented by the roll coater 25, and is spread by the spreader. As a result, a thin layer of the second gypsum slurry 23 is formed on the front-cover base paper 21. Similarly, a thin layer of the second gypsum slurry 23 is formed on the back-cover base paper 26.

The front-cover base paper 21 is conveyed in the same conveying direction. On the other hand, the conveying direction of the back-cover base paper 26 is changed by the direction-changing rollers 28A and 28B to a direction that is the same as the direction of the conveying line of the front-cover base paper 21.

Then, both of the front-cover base paper 21 and the back-cover base paper 26 reach the molding machine 29. At this stage, the first gypsum slurry 24 is supplied via the pipe line 226 to a space between the thin layers formed on the front-cover base paper 21 and the back-cover base paper 26.

At the dispensing port 225, foam was added to set the specific gravity of the gypsum core at 0.7. The foam was prepared by using a foaming agent (main component: alkyl ether sulfate).

As described above, when the first gypsum slurry 24 is supplied, the first gypsum slurry 24 is placed on the front-cover base paper 21 via the thin layer of the second gypsum slurry 23. Also, the back-cover base paper 26 is conveyed onto the first gypsum slurry 24. As a result, the first gypsum slurry 24 is sandwiched between the thin layers of the second gypsum slurry 23 formed on the surfaces of the front-cover base paper 21 and the back-cover base paper 26 facing the first gypsum slurry 24.

Next, the front-cover base paper 21 was bent along folding lines parallel to the longitudinal direction (the Y-axis direction in the figure) such that ends of the front-cover base paper 21 in the width direction (the X-axis direction in the figure) extend around to the upper side of the first gypsum slurry 24. Then, the front-cover base paper 21, the first gypsum slurry 24, and the back-cover base paper 26 were molded by the molding machine 29 into a plate-shaped molded body (molding step).

The obtained molded body had a structure similar to the molded body 30 illustrated in FIGs. 3A and 3B. Each of the distances L1 and L2 between the sides 322A and 322B, i.e., the steps or the lateral ends of the back-cover base paper 322 located on the upper side of the gypsum core 31, and the lateral ends 30C and 30D of the molded body 30 was 50 mm. In Table 1, the distances L1 and L2 are represented by an average of the distances between the lateral ends of the back-cover base paper and the lateral ends of the molded body on the back surface. The same applies to other examples and comparative examples described below.

The gypsum slurry of the gypsum core 31 in the obtained molded body 30 was hardened while the molded body 30 was conveyed (hardening step). The molded body 30 hardens and reaches a rough cutter (not shown). The rough cutter cuts the molded body, which is a continuous multilayer structure, along cutting lines orthogonal to the longitudinal direction of the molded body 30 into plate-shaped bodies with a predetermined length to form plate-shaped bodies, i.e., intermediate products of gypsum boards, each including a core made mainly of gypsum and covered with base paper.

The roughly-cut multilayer structure was caused to pass through a dryer (not shown), and was forcibly dried to remove excess water (drying step). Then, the multilayer structure was cut along cutting lines orthogonal to the longitudinal direction of the molded body to form products of gypsum boards with a predetermined length.

The width of each obtained gypsum board was 470 mm, and a decorative sheet was bonded to the gypsum board to cover the front surface and the side surfaces of the gypsum board (decorative sheet attaching step). Portions of the decorative sheet extend to and are bonded to the back surface of the gypsum board.

Next, as illustrated in FIG. 6, the bars 51 and 52 were fixed with an adhesive to the lateral end portions on the back surface of the molded body 30 that became the gypsum board (bar attaching step). At this step, the bonding surfaces 512 and 522 of the bars 51 and 52 bonded to the molded body 30 that became the gypsum board were placed between the side 322A and the side 322B, i.e., the lateral ends of the back-cover base paper 322, and the lateral ends 30C and 30D of the molded body 30 that became the gypsum board.

With the obtained rabbet-joint gypsum board, a rabbet-joint bar attachment test was performed on the bar 52, i.e., the male bar. In the rabbet-joint bar attachment test, the male bar among the rabbet-joint bars attached in the bar attaching step was removed from the rabbet-joint gypsum board that was cut to have a length of 10 cm in the longitudinal direction, and the area where the cover base paper was delaminated was evaluated. Specifically, the area of a portion of the surface of the male bar facing the gypsum board, which portion is located between the lateral end of the molded body 30 that became the gypsum board and the center of the gypsum board and can be bonded to the gypsum board, was used as the denominator, and the area of a portion of the cover base paper delaminated and adhered to the male bar when the male bar was removed was used as the numerator. Then, a result of 100% was evaluated as "Good", and other results were evaluated as "Bad".

In addition, a side-surface appearance evaluation was performed to evaluate the appearance of the side surface of the obtained rabbet-joint gypsum board. If no swelling or peeling was observed in the bonded decorative sheet and the appearance of the decorative sheet was good, it was evaluated as "Good". If swelling or peeling was observed in the bonded decorative sheet, it was evaluated as "Bad".

The results are given in Table 1.

### [EXAMPLE 2]

A molded body (gypsum board) and a rabbet-joint gypsum board were produced and evaluated in the same manner as in Example 1, except that the molded body illustrated in FIGs. 5A and 5B was produced using only the front-cover base paper 21 and without using the back-cover base paper 26.

Each of the distances between the sides 421A and 421B, i.e., the steps or the lateral ends of the back-cover base paper 322 located on the upper side of the gypsum core 41, and the lateral ends 40C and 40D of the molded body 40 was 235 mm.

The evaluation results are given in Table 1.

### [COMPARATIVE EXAMPLE 1]

In the molding step, a molded body (gypsum board) was produced in the same manner as in Example 1 except that the molded body was produced such that the distances L1 and L2 between the sides 322A and 322B, i.e., the lateral ends of the back-cover base paper 322 located on the upper side of the gypsum core 31, and the lateral ends 30C and 30D of the molded body 30 were 10 mm, and that the width of the gypsum board was set at 530 mm.

In this case, however, on the back surface of the obtained gypsum board, the lateral ends of the back-cover base paper were positioned near the lateral ends of the gypsum board. For this reason, as described with reference to FIGs. 1A and 1B, the end portions 14A and 14B were removed by cutting the gypsum board 10 along the cutting lines 13A and 13B located at 30 mm from the lateral ends of the gypsum board 10 to remove the paper-overlap portions including steps on the back surface of the gypsum board, and then the decorative sheet attaching step and the bar attaching step were performed on the gypsum board from which the end portions 14A and 14B had been removed.

The evaluation results are given in Table 1.

### [COMPARATIVE EXAMPLE 2]

In the molding step, a molded body (gypsum board) and a rabbet-joint gypsum board were produced and evaluated in the same manner as in Example 1 except that the molded body was produced such that the distances L1 and L2 between the sides 322A and 322B, i.e., the lateral ends of the back-cover base paper 322 located on the upper side of the gypsum core 31, and the lateral ends 30C and 30D of the molded body 30 became 10 mm.

The evaluation results are given in Table 1.

**[Table 1]**

| | Distance between step and lateral end of molded body | Rabbet-joint bar attachment test | Side-surface appearance evaluation |
|---|---|---|---|
| Example 1 | 50 mm | Good | Good |
| Example 2 | 235 mm | Good | Good |
| Comparative Example 1 | None | Good | Bad |
| Comparative Example 2 | 10 mm | Bad (75%) | Good |

According to the results in Table 1, in each of Example 1 and Example 2, where the distance between the step formed by the overlap of the cover base paper and the lateral end of the molded body produced in the molding step is greater than or equal to 15 mm, both of the evaluation results are good.

It is believed that the above results are achieved because the gypsum board obtained from the molded body is flat and does not include any non-smooth portion resulting from the paper-overlap portion including a step near the lateral end, and the adhesion between the bar and the gypsum board is sufficiently high. Also, it is believed that the adhesion between the gypsum board and the decorative sheet is improved because the gypsum core is not exposed on the side surface of the gypsum board.

In contrast, in Comparative Example 1 where the non-smooth portion resulting from the paper-overlap portion including a step on the back surface of the gypsum board is removed, although the result of the rabbet-joint bar attachment test is good, the result of the side-surface appearance evaluation is bad because the gypsum core is exposed on the side surface of the gypsum board when the non-smooth portion is cut and the adhesion between the side surface and the decorative sheet is bad.

In Comparative Example 2, the back surface of the gypsum board includes, near the lateral end of the gypsum board, a non-smooth portion resulting from the paper-overlap portion including a step. For this reason, the adhesion between the bar and the gypsum board is low, and the result of the rabbet-joint bar attachment test is bad.

As described above, it is confirmed that a gypsum board suitable for a rabbet-joint gypsum board, i.e., a gypsum board to which a bar and a decorative sheet can be properly bonded, is obtained in Examples 1 and 2. In contrast, in each of Comparative Examples 1 and 2, the obtained gypsum board is not suitable for a rabbet-joint gypsum board because the gypsum board cannot be strongly bonded to the bar or the adhesion between the decorative sheet and the obtained gypsum board is low.

A gypsum board manufacturing method and a gypsum board according to the embodiments are described above. However, the present invention is not limited to the above embodiments, and variations and modifications may be made without departing from the scope of the present invention described in the claims.

The present application is based on and claims priority to Japanese Patent Application No. 2017-204776, filed on October 23, 2017, the entire contents of which are hereby incorporated herein by reference.

### EXPLANATION OF REFERENCE NUMERALS

21, 321, 3211, 421, 7211, 7212, 7213 Front-cover base paper
23 Second gypsum slurry
24 First gypsum slurry
26, 322, 3221, 7221, 7222, 7223 Back-cover base paper
30, 301, 40 Molded body
30C, 30D, 301C, 301D, 40C, 40D, 701D, 702C, 702D, 703C End
31, 311, 41, 711, 712, 713 Gypsum core
L1, L2, L12, L21, L22, L31 Distance
501, 502, 503, 701, 702, 703 Gypsum board
51, 52, 5012, 5021, 5022, 5031 Bar
731, 732 Base part

## Claims

1. A gypsum board manufacturing method, comprising:
a molding step of forming a plate-shaped molded body (30) including gypsum slurry and cover base paper disposed to cover at least a part of a surface of the gypsum slurry, wherein
the molded body includes front-cover base paper (321) and back-cover base paper (322) as the cover base paper;
in the molding step,
the gypsum slurry is placed on the front-cover base paper (321), and the front-cover base paper (321) is bent such that lateral ends of the front-cover base paper (321) extend around to an upper side of the gypsum slurry,
the back-cover base paper (322) is placed on the gypsum slurry such that the lateral ends of the front-cover base paper (321A, 321B) extending around to the upper side of the gypsum slurry and lateral ends of the back-cover base paper (322A, 322B) overlap each other at two positions (33A, 33B), and
the plate-shaped molded body (30) including the front-cover base paper (321), the gypsum slurry, and the back-cover base paper (322) is molded;
in a cross section orthogonal to a longitudinal direction of the molded body (30),
the cover base paper completely covers a periphery of the gypsum slurry, and portions of the cover base paper overlap each other, **characterised by**
a distance (L1, L2) between each of two steps, which are formed by the overlap of the lateral ends of the front-cover base paper (321A, 321B) and the lateral ends of the back-cover base paper (322A, 322B), and a corresponding lateral end of the molded body (30C, 30 D) is greater than or equal to 15 mm.

2. The gypsum board manufacturing method as claimed in claim 1, further comprising:
a hardening step of hardening the gypsum slurry; and
a bar attaching step of fixing a bar (51, 52) to obtained gypsum board after the hardening step,
wherein a bonding surface of the bar bonded to the gypsum board is positioned between each of the steps and a corresponding lateral end of the gypsum board (30C, 30 D).

3. A gypsum board, comprising:
hardened gypsum; and
two pieces of cover base paper (321, 322) disposed to cover at least a part of a surface of the hardened gypsum and including front-cover base paper (321) and back-cover base paper (322), the gypsum board having a plate shape, wherein
in a cross section orthogonal to a longitudinal direction of the hardened gypsum,
the cover base paper completely covers a periphery of the hardened gypsum, and portions of the cover base paper overlap each other at two positions (33A, 33B), **characterised by**
a distance (L1, L2) between each of two steps, which are formed by the overlap of lateral ends of the front-cover base paper (321A, 321B) and laterals ends of the back-cover base paper (322A, 322B), and a corresponding lateral end of the gypsum board (30C, 30D) is greater than or equal to 15 mm.

4. The gypsum board as claimed in claim 3, wherein the distance (L1, L2) between each of the two steps formed by the overlap (322A, 322B) of the cover base paper and the corresponding lateral end of the gypsum board (30C, 30D) is greater than or equal to 19 mm.

5. The gypsum board as claimed in claim 3, wherein the distance (L1, L2) between each of the two steps formed by the overlap (322A, 322B) of the cover base paper and the corresponding lateral end of the gypsum board (30C, 30D) is greater than or equal to 40 mm.

## Patentansprüche

1. Verfahren zur Herstellung von Gipsplatten, umfassend:
einen Formungsschritt des Bildens eines plattenförmigen Formkörpers (30), der eine Gipsaufschlämmung und ein Abdeckungsgrundpapier enthält, das so angeordnet ist, dass es mindestens einen Teil einer Oberfläche der Gipsaufschlämmung bedeckt, wobei
der geformte Körper ein Abdeckungsgrundpapier für die Vorderseite (321) und ein Abdeckungsgrundpapier für die Rückseite (322) als das Abdeckungsgrundpapier enthält;
in dem Formungsschritt,
die Gipsaufschlämmung auf das Abdeckungsgrundpapier für die Vorderseite (321) gelegt wird und das Abdeckungsgrundpapier für die Vorderseite (321) so gebogen wird, dass sich seitliche Enden des Abdeckungsgrundpapiers für die Vorderseite (321) um eine Oberseite der Gipsaufschlämmung herum erstrecken,
das Abdeckungsgrundpapier für die Rückseite (322) so auf dem Gipsbrei platziert wird, dass die seitlichen Enden des Abdeckungsgrundpapiers für die Vorderseite (321A, 321B), die sich um die Oberseite des Gipsbreis erstrecken, und die seitlichen Enden des Abdeckungsgrundpapiers für die Rückseite (322A, 322B) einander an zwei Positionen (33A, 33B) überlappen, und
der plattenförmige Formkörper (30), der das Abdeckungsgrundpapier für die Vorderseite (321), den Gipsbrei und das Abdeckungsgrundpapier für die Rückseite (322) enthält, geformt wird;
in einem Querschnitt orthogonal zu einer Längsrichtung des Formkörpers (30),
das Abdeckungsgrundpapier eine Randzone des Gipsbreis vollständig bedeckt und Teile des Abdeckungsgrundpapiers einander überlappen, **dadurch gekennzeichnet, dass**
ein Abstand (L1, L2) zwischen jeder von zwei Stufen, die durch die Überlappung der seitlichen Enden des Abdeckungsgrundpapiers für die Vorderseite (321A, 321B) und der seitlichen Enden des Abdeckungsgrundpapiers für die Rückseite (322A, 322B) gebildet werden, und einem entsprechenden seitlichen Ende des Formkörpers (30C, 30 D) größer als oder gleich 15 mm ist.

2. Verfahren zur Herstellung von Gipsplatten nach Anspruch 1, ferner umfassend:
einen Härtungsschritt zum Härten der Gipsaufschlämmung; und
einen Schritt zum Befestigen eines Stabes (51, 52) an der erhaltenen Gipsplatte nach dem Härtungsschritt,
wobei eine Klebefläche des an die Gipsplatte geklebten Stabes zwischen jedem der Schritte und einem entsprechenden seitlichen Ende der Gipsplatte (30C, 30 D) angeordnet ist.

3. Gipsplatte, umfassend:
gehärteten Gips; und
zwei Stücke Abdeckungsgrundpapier (321, 322), die so angeordnet sind, dass sie mindestens einen Teil einer Oberfläche des gehärteten Gipses abdecken, und die ein Abdeckungsgrundpapier für die Vorderseite (321) und ein Abdeckungsgrundpapier für die Rückseite (322) umfassen, wobei die Gipsplatte eine Plattenform hat, wobei
in einem Querschnitt orthogonal zu einer Längsrichtung des gehärteten Gipses,
das Abdeckungsgrundpapier eine Randzone des gehärteten Gipses vollständig bedeckt und Abschnitte des Abdeckungsgrundpapiers einander an zwei Positionen (33A, 33B) überlappen, **dadurch gekennzeichnet, dass**
ein Abstand (L1, L2) zwischen jeder der beiden Stufen, die durch die Überlappung der seitlichen Enden des Abdeckungsgrundpapiers für die Vorderseite (321A, 321B) und der seitlichen Enden des Abdeckungsgrundpapiers für die Rückseite (322A, 322B) gebildet werden, und einem entsprechenden seitlichen Ende der Gipsplatte (30C, 30D) größer als oder gleich 15 mm ist.

4. Gipsplatte nach Anspruch 3, wobei der Abstand (L1, L2) zwischen jeder der beiden Stufen, die durch die Überlappung (322A, 322B) des Abdeckungsgrundpapiers und dem entsprechenden seitlichen Ende der Gipsplatte (30C, 30D) gebildet werden, größer oder gleich 19 mm ist.

5. Gipsplatte nach Anspruch 3, wobei der Abstand (L1, L2) zwischen jeder der beiden Stufen, die durch die Überlappung (322A, 322B) des Abdeckungsgrundpapiers und dem entsprechenden seitlichen Ende der Gipsplatte (30C, 30D) gebildet werden, größer oder gleich 40 mm ist.

## Revendications

1. Procédé de fabrication de plaque de plâtre, comprenant :
une étape de moulage consistant à former un corps moulé en forme de plaque (30) comprenant une suspension de plâtre et un papier de base de couverture disposé pour couvrir au moins une partie d'une surface de la suspension de plâtre, dans lequel
le corps moulé comprend un papier de base de couverture avant (321) et un papier de base de couverture arrière (322) comme papier de base de couverture ;
dans l'étape de moulage,
le coulis de plâtre est placé sur le papier de base de couverture avant (321), et le papier de base de couverture avant (321) est plié de sorte que les extrémités latérales du papier de base de couverture avant (321) s'étendent autour d'un côté supérieur du coulis de plâtre,
le papier de base de couverture arrière (322) est placé sur le coulis de plâtre de sorte que les extrémités latérales du papier de base de couverture avant (321A, 321B) s'étendant autour du côté supérieur du coulis de plâtre et les extrémités latérales du papier de base de couverture arrière (322A, 322B) se chevauchent l'une l'autre à deux positions (33A, 33B), et
le corps moulé en forme de plaque (30) comprenant le papier de base de couverture avant (321), le coulis de plâtre et le papier de base de couverture arrière (322) est moulé ;
dans une section transversale orthogonale à une direction longitudinale du corps moulé (30),
le papier de base de couverture couvre complètement une périphérie du coulis de plâtre, et des parties du papier de base de couverture se chevauchent les unes les autres, **caractérisé par**
une distance (L1, L2) entre chacune de deux étapes, qui sont formées par le chevauchement des extrémités latérales du papier de base de couverture avant (321A, 321B) et des extrémités latérales du papier de base de couverture arrière (322A, 322B), et une extrémité latérale correspondante du corps moulé (30C, 30 D) est supérieure ou égale à 15 mm.

2. Procédé de fabrication de plaques de plâtre selon la revendication 1, comprenant en outre :
une étape de durcissement pour durcir la pâte de plâtre ; et
une étape de fixation de barre consistant à fixer une barre (51, 52) à la plaque de plâtre obtenue après l'étape de durcissement,
dans lequel une surface de liaison de la barre fixée à la plaque de plâtre est positionnée entre chacune des étapes et une extrémité latérale correspondante de la plaque de plâtre (30C, 30 D).

3. Plaque de plâtre, comprenant :
du plâtre durci ; et
deux morceaux de papier de base de couverture (321, 322) disposés pour couvrir au moins une partie d'une surface du plâtre durci et comprenant un papier de base de couverture avant (321) et un papier de base de couverture arrière (322), la plaque de plâtre ayant une forme de plaque, dans laquelle
dans une section transversale orthogonale à une direction longitudinale du plâtre durci,
le papier de base de couverture couvre complètement une périphérie du plâtre durci, et des parties du papier de base de couverture se chevauchent les unes les autres en deux positions (33A, 33B), **caractérisé par**
une distance (L1, L2) entre chacune des deux étapes, qui sont formées par le chevauchement des extrémités latérales du papier de base de couverture avant (321A, 321B) et des extrémités latérales du papier de base de couverture arrière (322A, 322B), et une extrémité latérale correspondante de la plaque de plâtre (30C, 30D) est supérieure ou égale à 15 mm.

4. Plaque de plâtre selon la revendication 3, dans laquelle la distance (L1, L2) entre chacune des deux étapes formées par le chevauchement (322A, 322B) du papier de base de la couverture et l'extrémité latérale correspondante de la plaque de plâtre (30C, 30D) est supérieure ou égale à 19 mm.

5. Plaque de plâtre selon la revendication 3, dans laquelle la distance (L1, L2) entre chacune des deux étapes formées par le chevauchement (322A, 322B) du papier de base de la couverture et l'extrémité latérale correspondante de la plaque de plâtre (30C, 30D) est supérieure ou égale à 40 mm.
